(19) Europäisches Patentamt European Patent Office Office européen des brevets

(11) **EP 4 583 614 A1**

(12) **EUROPEAN PATENT APPLICATION**
published in accordance with Art. 153(4) EPC

(43) Date of publication:
**09.07.2025 Bulletin 2025/28**

(21) Application number: **23948085.8**

(22) Date of filing: **10.08.2023**

(51) International Patent Classification (IPC):
***H04W 72/25*** (2023.01)   ***H04W 72/04*** (2023.01)

(52) Cooperative Patent Classification (CPC):
**H04W 72/04; H04W 72/25**

(86) International application number:
**PCT/CN2023/112321**

(87) International publication number:
**WO 2025/030512 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHANG, Shichang**
**Dongguan, Guangdong 523860 (CN)**
• **MA, Teng**
**Dongguan, Guangdong 523860 (CN)**

(74) Representative: **RGTH**
**Patentanwälte PartGmbB**
**Neuer Wall 10**
**20354 Hamburg (DE)**

(54) **RESOURCE SELECTION METHOD AND TERMINAL DEVICE**

(57)    A resource selection method and a terminal device are provided. The method includes: determining, by a physical layer of a terminal device, a first candidate resource set within a resource selection window, where resources in the first candidate resource set are sidelink positioning reference signal resources within the resource selection window; and reporting, by the physical layer of the terminal device, a second candidate resource set to a media access control (MAC) layer of the terminal device, where the second candidate resource set includes part or all of the resources in the first candidate resource set.

A physical layer of a terminal device determines a first candidate resource set within a resource selection window — S910

The physical layer of the terminal device reports a second candidate resource set to an MAC layer — S920

FIG. 9

**Description**

## TECHNICAL FIELD

The present disclosure relates to the field of communication technologies, and in particular, to a resource selection method and a terminal device.

## BACKGROUND

There may be multiple time division sidelink positioning reference signal (SL PRS) resources in one slot, and the configurations of different SL PRS resources may also be different. Therefore, in resource selection, how the terminal device should select SL PRS resources is an unresolved issue.

## SUMMARY

Embodiments of the present disclosure provide a resource selection method and a terminal device. The various aspects involved in embodiments of the present disclosure are introduced below.

In a first aspect, a resource selection method is provided, including:

determining, by a physical layer of a terminal device, a first candidate resource set within a resource selection window, where resources in the first candidate resource set are sidelink positioning reference signal resources within the resource selection window; and

reporting, by the physical layer of the terminal device, a second candidate resource set to a media access control (MAC) layer of the terminal device, where the second candidate resource set includes part or all of the resources in the first candidate resource set.

In a second aspect, a terminal device is provided, including:

a determining module, configured for a physical layer of a terminal device to determine a first candidate resource set within a resource selection window, where resources in the first candidate resource set are sidelink positioning reference signal resources within the resource selection window;

a reporting module, configured for the physical layer of the terminal device to report a second candidate resource set to a media access control (MAC) layer of the terminal device, where the second candidate resource set includes part or all of the resources in the first candidate resource set.

In a third aspect, a terminal device is provided, including a transceiver, a memory and a processor, where the memory is configured to store a program, and the processor is configured to call the program in the memory and control the transceiver to receive or transmit a signal, to enable the terminal device to perform the method according to the first aspect.

In a fourth aspect, an apparatus is provided, including a processor, configured to call a program from a memory, to enable the apparatus to perform the method according to the first aspect.

In a fifth aspect, a chip is provided, including a processor, configured to call a program from a memory, to enable a device equipped with the chip to perform the method according to the first aspect.

In a sixth aspect, there is provided a computer-readable storage medium, having stored thereon a program that enables a computer to perform the method according to the first aspect.

In a seventh aspect, a computer program product is provided, including a program that enables a computer to perform the method according to the first aspect.

In an eighth aspect, there is provided a computer program that enables a computer to perform the method according to the first aspect.

The embodiments of the present disclosure propose to perform resource selection with a granularity of an SL PRS resource, and the selected resources are more conducive to the transmission of the SL PRS.

## BRIEF DESCRIPTION OF THE DRAWINGS

FIG. 1 is an exemplary diagram of a system architecture of a wireless communication system to which embodiments of the present disclosure may be applied.

FIG. 2 is an exemplary diagram of physical sidelink control channel (PSCCH) and physical sidelink control channel (PSSCH) resource pool.

FIG. 3 is a schematic structural diagram of a slot in a new radio (NR) system.

FIG. 4 is an exemplary diagram of a resource selection process of a second resource selection mode.

FIG. 5 is an exemplary diagram of resources for transmitting a downlink positioning reference signal (DL PRS).

FIG. 6 is a structural exemplary diagram of interlaced resource blocks.

FIG. 7 is an exemplary diagram of a frame structure of a sidelink over unlicensed spectrum (SL-U) system.

FIG. 8 is an exemplary diagram of a resource block (RB) set.

FIG. 9 is a schematic flowchart of a resource selection method provided in the embodiments of the present disclosure.

FIG. 10 is a schematic structural diagram of a terminal device provided in the embodiments of the present disclosure.

FIG. 11 is a schematic structural diagram of an apparatus provided in the embodiments of the present disclosure.

## DETAILED DESCRIPTION

Technical solutions in the present disclosure will be described below with reference to the drawings.

## Communication system architecture

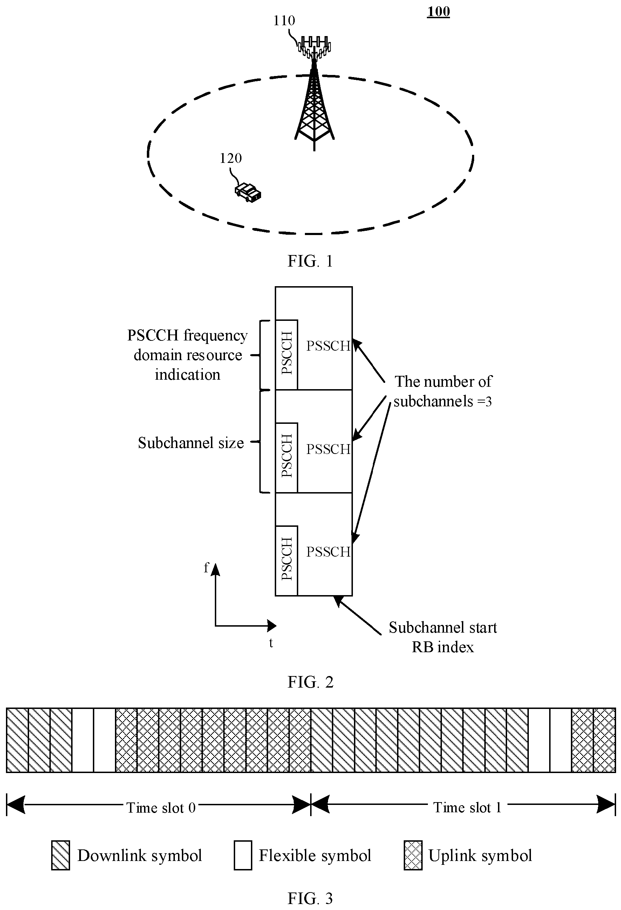

FIG. 1 is an exemplary diagram of a system architecture of a wireless communication system 100 to which the embodiments of the present disclosure may be applied. The wireless communication system 100 may include a network device 110 and a terminal device 120. The network device 110 may be a device that communicates with the terminal device 120. The network device 110 may provide communication coverage for a specific geographical area, and may perform communication with the terminal device 120 located within the coverage area.

FIG. 1 exemplarily illustrates a network device and a terminal device. Optionally, the wireless communication system 100 may include one or more network devices 110 and/or one or more terminal devices 120. For one network device 110, the one or more terminal devices 120 may all be located within the network coverage of the network device 110, or may all be located outside the network coverage of the network device 110, or some terminal devices 120 may be located within the coverage of the network device 110 and other terminal devices 120 may be located outside the network coverage of the network device 110, which is not limited in the embodiments of the present disclosure.

Optionally, the wireless communication system 100 may also include other network entities, such as a network controller and a mobility management entity, which is not limited in the embodiments of the present disclosure.

It should be understood that the technical solutions of the embodiments of the present disclosure may be applied to various communication systems, such as: the 5th generation (5G) system or a new radio (NR), a long term evolution (LTE) system, an LTE frequency division duplex (FDD) system, an LTE time division duplex (TDD) or the like. The technical solutions provided in the disclosure may also be applied to future communication systems, such as the 6th generation mobile communication system, a satellite communication system, or the like.

The terminal device in the embodiments of the present disclosure may also be referred to as user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The terminal device in the embodiments of the present disclosure may refer to a device that provides voice and/or data connectivity to a user and may be configured to connect people, objects, and machines, such as a handheld device or vehicle-mounted device with a wireless connection function, etc. The terminal device in the embodiments of the present disclosure may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. Optionally, the UE may be configured to act as a base station. For example, the UE may act as a scheduling entity that provides sidelink signals between UEs in V2X or D2D, etc. For example, a cellular phones and a car communicate with each other using sidelink signals. The cellular phones and a smart home device communicate with each other without relaying the communication signal via a base station.

The network device in the embodiments of the present disclosure may be a device for communicating with the terminal device, and the network device may also be referred to as an access network device or a wireless access network device, e.g., the network device may be a base station. The network device in the embodiments of the present disclosure may refer to a radio access network (RAN) node (or device) that accesses the terminal device to the wireless network. The base station may broadly cover the following various names, or be replaced with the following names, such as: node B (NodeB), evolved base station (evolved NodeB, eNB), next generation base station (next generation NodeB, gNB), relay station, access point, transmission point (transmitting and receiving point, TRP), transmitting point (TP), master station MeNB, secondary station SeNB, multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, a modem or a chip configured to be set in the aforementioned device or apparatus. The base station may also be a mobile switching center, a device that performs the base station function in device-to-device (D2D), vehicle-to-everything (V2X), and machine-to-machine (M2M) communications, a network-side device in a 6G network, and a device that performs the base station function in future communication systems. The base stations may support networks of the same or different access technologies. The embodiments of the present disclosure do not limit the specific technology and specific device form adopted by the network device.

Base stations may be fixed or mobile. For example, a helicopter or drone may be configured to act as a mobile base station, and one or more cells may move based on the location of the mobile base station. In other examples, a helicopter or drone may be configured to function as a device for communicating with another base station.

In some deployments, the network device in the embodiments of the present disclosure may refer to a CU or a DU, or the network device includes a CU and a DU. The gNB may also include an AAU.

The network device and the terminal device may be deployed on land, including indoors or outdoors, handheld or in-vehicle. The network device and the terminal device may also be deployed on the water. The network device and the terminal device may also be deployed in the air on aircraft, balloons and satellites. The embodiments of the present disclosure do not limit the scenarios in which the network device and the terminal device are located.

It should be understood that all or part of the functions of the communication device in the present disclosure may also be implemented by software functions running on hardware, or implemented by virtualization functions instantiated on a platform (e.g., a cloud platform).


## Determination of NR-V2X frequency domain resources

Similar to LTE-V2X, frequency domain resources of the NR-V2X resource pool may be continuous, and an allocation granularity of the frequency domain resources may be a subchannel. Generally, the number of physical resource blocks (PRBs) included in a subchannel is {10, 12, 15, 20, 50, 75, 100}, where the smallest subchannel size is 10 PRBs, much larger than the smallest subchannel size of 4 PRBs in the LTE-V2X. This is mainly because the frequency domain resources of a PSCCH in the NR-V2X are located in a first subchannel of a PSSCH associated with the PSCCH, and the frequency domain resources of the PSCCH are less than or equal to the subchannel size of the PSSCH, while the time domain resources of a PSCCH occupy 2 or 3 orthogonal frequency division multiplexing (OFDM) symbols. If the subchannel size is configured to be relatively small, it will result in few available resources to the PSCCH, increasing the bit error rate, and reducing the detection performance of the PSCCH. In the NR-V2X, the subchannel size of the PSSCH and the frequency domain resource size of the PSCCH are configured independently, but generally, the frequency domain resources of the PSCCH are less than or equal to the subchannel size of the PSSCH.

In some implementations, the following configuration parameters in NR-V2X resource pool configuration information are configured to determine the frequency domain resources of the PSCCH and PSSCH resource pools: subchannel size (*sl-SubchannelSize*), number of subchannels (*sl-NumSubchannel*), subchannel start resource block (RB) index (*sl-StartRB-Subchannel*), number of PRBs (*sl-RB-Number*), and PSCCH frequency domain resource indication (*sl-FreqResourcePSCCH*).

The above subchannel size may indicate the number of consecutive PRBs included in a subchannel in the resource pool, and a value range may be {10, 12, 15, 20, 50, 75, 100} PRBs.

The above number of subchannels may indicate the number of subchannels included in the resource pool.

The subchannel start RB index may indicate a start PRB index of the first subchannel in the resource pool.

The above number of PRBs may indicate the number of consecutive PRBs included in the resource pool.

The above PSCCH frequency domain resource indication may indicate the frequency domain resource size of the PSCCH, and generally, the value range is {10, 12, 15, 20, 25} PRBs.

In some implementations, when the terminal device determines a resource pool used for PSSCH transmission or PSSCH reception, the frequency domain resources included in the resource pool may be *sl-NumSubchannel* consecutive subchannels starting from the PRB indicated by *sl-StartRB-Subchannel.* If the number of PRBs included in *sl-NumSubchannel* consecutive subchannels is less than the number of PRBs indicated by *sl-RB-Number,* the remaining PRBs cannot be used for PSSCH transmission or reception.

In the NR-V2X, frequency domain start positions of the first subchannel of a PSCCH and a PSSCH with which the PSCCH is associated may be aligned. Therefore, a respective start position of each PSSCH subchannel is a possible frequency domain start position of the PSCCH. The frequency domain range of a resource pool of the PSCCH and PSSCH may be determined according to the above parameters. FIG. 2 illustrates a schematic diagram of the PSCCH and PSSCH resource pool.

Generally, the PSCCH is configured to carry sidelink control information related to resource sensing. In some implementations, the information carried by the PSCCH may include one or more of the following: priority of scheduled transmission, frequency domain resource allocation, time domain resource allocation, reference signal pattern of PSSCH, second-order sidelink control information (SCI) format, second-order SCI code rate offset, number of PSSCH demodulation reference signal (DMRS) ports, modulation and coding scheme (MCS), MCS table indication, number of physical sidelink feedback channel (PSFCH) symbols, resource reservation period, reserved bits, etc.

The frequency domain resource allocation is configured to indicate the number of frequency domain resources of a PSSCH in a current slot scheduled by a PSCCH, and the number and start position of the frequency domain resources of at most two retransmission resources reserved.

The time domain resource allocation is configured to indicate time domain locations of at most two retransmission resources.

The resource reservation period is configured to reserve resources used for transmitting another transport block (TB) in a next period. Generally, when inter-TB resource reservation is not activated in the resource pool configuration, a bit field of information of the resource reservation period does not exist.

The reserved bits, generally 2 to 4 bits, the specific number of bits may be configured or pre-configured by the network.

Since the PSCCH and the scheduled PSSCH are transmitted in a same slot, and a start position of the PRB occupied by the PSCCH may be a start position of the first subchannel of the scheduled PSSCH, the above PSCCH (i.e., SCI format 1-A) does not explicitly indicate a start position of a time-frequency domain of the scheduled PSSCH.

### Determination of NR-V2X time domain resources (slot)

In the NR-V2X, the transmission of the PSCCH/PSSCH is generally based on a slot level, that is, only one PSCCH/PSSCH may be transmitted in one slot, and the transmission of multiple PSCCHs/PSSCHs in one slot by manners of time-division multiplexing (TDM) is not supported. In addition, PSCCH/PSSCH between different users may be multiplexed in one slot by manners of frequency division multiplexing (FDM).

In the NR-V2X, granularity of time domain resources of the PSSCH may be time-slot granularity. However, unlike the LTE-V2X in which the PSSCH occupies all time domain symbols in a subframe, the PSSCH in the NR-V2X may occupy part of symbols in a slot. This is mainly because in an LTE system, granularity of uplink transmission or downlink transmission is subframe granularity, so granularity of sidelink transmission is also subframe granularity (special subframes in the TDD system are not used for the sidelink transmission). The NR system adopts a flexible slot structure, that is, one slot includes both uplink symbols and downlink symbols, which may achieve more flexible scheduling and reduce latency.

FIG. 3 illustrates a schematic structural diagram of a slot in an NR system. Referring to FIG. 3, the slot may include downlink (DL) symbols, uplink (UL) symbols, and flexible symbols. The downlink symbol may be located at a start position of the slot, the uplink symbol may be located at an end position of the slot, and there are flexible symbols between the downlink symbol and the uplink symbol. In addition, the number of various symbols in each slot is configurable.

Currently, a sidelink transmission system may share a carrier with a cellular system. In this case, the sidelink transmission may only use uplink transmission resources of the cellular system. For the NR-V2X, if the sidelink transmission is still required to occupy all time domain symbols in a slot, the network needs to configure a slot consisting entirely of uplink symbols for the sidelink transmission. This will have a great impact on the uplink and downlink data transmission of the NR system and reduce the performance of the system. Therefore, in the NR-V2X, it is supported that part of the time domain symbols in the slot are used for the sidelink transmission, that is, part of the uplink symbols in the slot are used for the sidelink transmission. In addition, considering that the sidelink transmission includes automatic gain control (AGC) symbols and guard period (GP) symbols, if the number of uplink symbols available for the sidelink transmission is small, after removing the AGC symbols and the GP symbols, the remaining symbols that may be used to transmit valid data are even fewer, and the resource utilization rate is very low. Therefore, the time domain symbols occupied by the sidelink transmission in the NR-V2X are at least 7 (including GP symbols). When the sidelink transmission system uses a dedicated carrier, there is no problem of sharing transmission resources with other systems, and all symbols in the slot may be configured to be used for the sidelink transmission.

In the NR-V2X, a start point and a length of time domain symbols used for the sidelink transmission in a slot may be configured via parameters start symbol position (*sl-StartSymbol*) and number of symbols (*sl-LengthSymbols*). The last symbol in the time domain symbols used for the sidelink transmission is taken as a guard period (GP), and the PSSCH and the PSCCH may only use the remaining time domain symbols. However, if PSFCH transmission resources are configured in a slot, time domain symbols used for PSFCH transmission cannot be occupied by the PSSCH and the PSCCH, and the AGC symbols and GP symbols before the time domain symbols used for the PSFCH transmission cannot be occupied by the PSSCH and the PSCCH either.

In an NR-V2X system, time domain resources of a resource pool are indicated by a bitmap. Considering the flexible slot structure in the NR system, a length of the bitmap is extended, and the supported bitmap length range is [10:160]. The manner of using the bitmap to determine a slot position belonging to a resource pool within a system frame number (SFN) period is the same as that in the LTE-V2X, but there are two differences.

Firstly, a total number of slots included in one SFN period is $10240 \times 2^{\mu}$, where the parameter $\mu$ is related to the subcarrier spacing size.

Secondly, if at least one the time domain symbol in time domain symbols $Y, Y + 1, Y + 2, ... , Y + X - 1$ included in a slot is not configured as an uplink symbol by *TDD-UL-DL-ConfigCommon* signaling of the network device, the slot cannot be used for the sidelink transmission. Where Y represents *sl-StartSymbol* and X represents *sl-LengthSymbols.*

The manner of determining the slot position belonging to the resource pool within an SFN period may include the following operations 1 to 5.

Operation 1: Remove slots that do not belong to the resource pool within the SFN period. The slots that do not belong to the resource pool may include synchronization slots and slots cannot be used for the sidelink transmission, etc. The remaining slots are represented as a remaining slot set, and the remaining slots are renumbered as ($l_0, l_1, ... , l_{(10240 \times 2^{\mu} - N_{S\_SSB} - N_{nonSL} - 1)}$).

Where $N_{S\_SSB}$ represents the number of synchronization slots in one SFN period, the synchronization slot is determined according to synchronization-related configuration parameters, and is related to a period of transmission of synchronization signal blocks (SSBs) and the number of transmission resources of the SSBs configured in the period.

$N_{nonSL}$ represents the number of slots not conforming to configuration of the start point and number of the uplink symbol within one SFN period. If at least one time domain symbol in the time symbols $Y, Y + 1, Y + 2, ... , Y + X - 1$ included in a slot is not semi-statically configured as an uplink symbol, the slot cannot be used for the sidelink transmission, where Y represents *sl-StartSymbol* and X represents *sl-LengthSymbols.*

Operation 2: Determine the number of reserved slots and the corresponding time domain positions.

If the number of slots in the remaining slot set cannot be divided evenly by the bitmap length, the number of reserved slots and the corresponding time domain positions need to be determined. In some implementations, if a slot $l_r$ ($0 \leq r < 10240 \times 2^{\mu}$ - $N_{S\_SSB}$ - $N_{nonSL}$) meets $r = \left\lfloor \frac{m \cdot (10240 \times 2^{\mu} - N_{S\_SSB} - N_{nonSL})}{N_{reserved}} \right\rfloor$ , then the slot is a reserved slot.

Where $N_{reserved} = (10240 \times 2^{\mu}$ - $N_{S\_SSB}$ - $N_{nonL})$ *mod* $L_{bitmap}$, represents the number of reserved slots, $L_{bitnap}$ represents the length of the bitmap, m = 0, ..., $N_{reserved}$ - 1.

Operation 3: Remove the reserved slots from the remaining slot set, and the remaining slot set is represented as a set of logical slots.

The slots in the above slot set are all slots that may be used in the resource pool. The slots in the set of logical slots are renumbered as $\left( t_0^{SL}, t_1^{SL}, \ldots, t_{T_{max}-1}^{SL} \right)$ , where $T_{max} = 10240 \times 2^{\mu}$ - $N_{S\_SSB}$ - $N_{nonSL}$ - $N_{reserved}$.

Operation 4: Determine, based on the bitmap, the slots in the set of logical slots belonging to the resource pool.

The bitmap in the resource pool configuration information is ($b_0, b_1, ... , b_{L_{bitmap}-1}$): for a slot $t_k^{SL} \left( 0 \leq k < \left( 10240 \times 2^{\mu} - N_{S\_SSB} - N_{nonSL} - N_{reserved} \right) \right)$ in the set of logical slots, when meeting $b_{k'} = 1$, the slot is a slot belonging to the resource pool, where $k' = k \bmod L_{bitmap}$.

Operation 5: Renumber the slots belonging to the resource pool determined in the operation 4 in sequence as $t'^{SL}_i$ , $i \in \{0, 1, ..., T'_{max} - 1\}$, where $T'_{max}$ represents the number of slots included in the resource pool.

## Second resource selection mode in NR SL

The second resource selection mode may also be referred to as resource allocation mode 2. In the resource allocation mode 2, the higher layer of the terminal device may request a physical layer of the terminal device to determine a resource subset. The higher layer of the terminal device may then select resources for PSSCH/PSCCH transmission from the resource subset determined by the physical layer.

If it is desired to trigger the above resource selection process, then in the slot *n*, the higher layer of the terminal device may provide the physical layer with the following parameters related to PSSCH/PSCCH transmission: a resource pool of the resource subset; a physical layer priority ($prio_{TX}$); a remaining packet delay budget (remaining PDB); the number of subchannels used for PSSCH/PSCCH transmission in a slot ($L_{subCH}$).

Optionally, the higher layer of the terminal device may also provide the physical layer with a resource reservation period ($P_{rsvp\_TX}$). The unit of the resource reservation period is generally milliseconds (ms).

The following parameters of the higher layer configuration may also affect the resource subset determination process: sl-SelectionWindowList, sl-ThresPSSCH-RSRP-List, sl-RS-ForSensing, sl-ResourceReservePeriodList, sl-SensingWindow, sl-TxPercentageList and sl-PreemptionEnable.

The sl-SelectionWindowList in the above parameters may be used to configure the minimum value of $T_{2min}$ for

different $prio_{TX}$. $T_{2min}$ may be set to the value configured by the sl-SelectionWindowList for $prio_{TX}$.

The sl-ThresPSSCH-RSRP-List in the above parameters may be used to configure a respective reference signal receiving power (RSRP) threshold corresponding to each ($p_i$, $p_j$) combination, where $p_i$ is a priority indicated in the received SCI, $p_j$ = $prio_{TX}$.

The sl-RS-ForSensing in the above parameters may be used to instruct the terminal device to use the PSSCH-RSRP or PSCCH-RSRP measurement results for resource exclusion.

The sl-ResourceReservePeriodList in the above parameters may be used to indicate a resource reservation period available in the resource pool.

The sl-SensingWindow in the above parameters may be used to indicate a start point $T_0$ of a resource sensing window. Where $T_0$ may be defined as the number of slots corresponding to sl-SensingWindow (in units of milliseconds).

The sl-TxPercentageList in the above parameters may be used to configure the remaining resource ratio $X$ after resource exclusion. For $prio_{TX}$, $X$ may be defined as sl-TxPercentageList ($prio_{TX}$).

The sl-PreemptionEnable parameter in the above parameters may be used to indicate whether to activate resource pre-emption in the resource pool, and indicate the value of the resource pre-emption priority $prio_{pre}$ when activating the resource pre-emption.

If the higher layer of the terminal device provides the resource reservation period $P_{rsvp\_TX}$, $P_{rsvp\_TX}$ may be converted into the number of logical slots $P'_{rsvp\_TX}$.

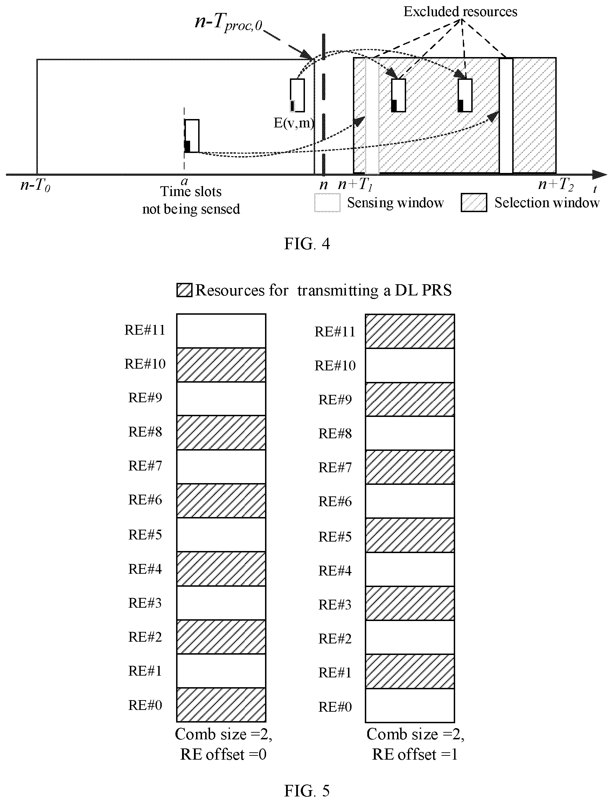

As illustrated in FIG. 4, the operation of determining the resource subset by the physical layer of the terminal device may include operations 1) to 7) below.

Operation 1), candidate single slot resources $R_{x,y}$ for transmission are defined as consecutive $L_{subCH}$ subchannels in the slot $t'^{SL}_y$. The index of the subchannel is x+j, $j = 0, ... , L_{subCH}$ - 1. The terminal device assumes that any consecutive $L_{subCH}$ subchannels within a time range [$n + T_1$, $n + T_2$] correspond to a single slot resource.

$T_1$ in the above time range may meet $0 \leq T_1 \leq T_{proc,1}$, and the value of $T_1$ may be determined by the terminal device implementation. When the subcarrier spacing is 15 kHz, $T_{proc,1}$ is 3 slots; when the subcarrier spacing is 30 kHz, $T_{proc,1}$ is 5 slots; when the subcarrier spacing is 60 kHz, $T_{proc,1}$ is 9 slots; and when the subcarrier spacing is 120 kHz, $T_{proc,1}$ is 17 slots.

If $T_{2min}$ is less than the remaining packet delay budget of the data packet in units of slots, then $T_{2min} \leq T_2 \leq PDB$, and the value of $T_2$ may be determined by the terminal device implementation. Otherwise, $T_2$ equals to PDB. The PDB may be indicated by the higher layer of the terminal device. A value set of $T_{2min}$ may be {1, 5, 10, 20}$\times 2^{\mu}$ slots, where $\mu = 0$ corresponds to a case in which the subcarrier spacing is 15 kHz; where $\mu = 1$ corresponds to a case in which the subcarrier spacing is 30 kHz; where $\mu = 2$ corresponds to a case in which the subcarrier spacing is 60KHz; and where $\mu = 3$ corresponds to a case in which the subcarrier spacing is 120 kHz. The terminal device may determine $T_{2min}$ from the value set according to the priority $prio_{TX}$ of its own data to be transmitted.

The total number of candidate single slot resources is $M_{total}$.

Operation 2), the resource sensing window is defined as a slot within the range of $[n - T_0, n - T^{SL}_{proc,0})$, where $T_0$ is defined as described above. When the subcarrier spacing is 15 kHz, $T_{proc,0}$ is 1 slot; when the subcarrier spacing is 30 kHz, $T_{proc,0}$ is 1 slot; when the subcarrier spacing is 60 kHz, $T_{proc,0}$ is 2 slots and when the subcarrier spacing is 120 kHz, $T_{proc,0}$ is 4 time. The terminal device should monitor the slots belonging to the sidelink resource pool within the resource sensing window, unless the terminal device performs a transmission operation on a certain slot.

Operation 3), the parameter $Th(p_i, p_j)$ is set to the $i$-th value configured by the sl-ThresPSSCH-RSRP-List, where $i = p_i + (p_j - 1) * 8$.

Operation 4), the set $S_A$ is initialized to all candidate single slot resources.

Operation 5), if the following conditions are met, the terminal device should exclude candidate resources $R_{x,y}$ in the $S_A$:

Condition 1: The terminal device does not sense the slot $t'^{SL}_m$ in the operation 2);
Condition 2: For the number of logical slots P corresponding to any resource reservation period allowed in the resource pool configured by sl-ResourceReservePeriodList, y=m+P.

Operation 6), if the following conditions are met, the terminal device should exclude candidate resources $R_{x,y}$ in the $S_A$:

Condition 1: The terminal device receives the SCI format 1-A in the slot $t'^{SL}_m$, where a 'Resource reservation period' field (if exists) is indicated as $P_{rsvp\_Rx}$ and a 'Priority' field is indicated as $prio_{RX}$;
Condition 2: The RSRP measured for the received SCI is higher than $Th(prio_{RX}, prio_{TX})$;

Condition 3: When the SCI format 1-A indication received in the slot $t'^{SL}_m$ and the reserved PSSCH resources overlap with $R_{x,y+j\times P'_{rsvp\_TX}}$, or the 'Resource reservation period' field exists in the received SCI format 1-A, it is assumed that the SCI indication of the same format received in the slot $t^{SL}_{m+q\times P'_{rsvp\_RX}}$ and the reserved resources overlap with $R_{x,y+j\times P'_{rsvp\_TX}}$. Where q= 1, 2, ..., Q, j=0, 1, ..., $C_{resel}$ - 1. Here, $P'_{rsvp\_RX}$ is the number of logical slots converted from $P_{rsvp\_RX}$. If $P_{rsvp\_RX} < T_{scal}$ and $n' - m \le P'_{rsvp\_RX}$, $Q = \left\lceil \dfrac{T_{scal}}{P_{rsvp\_RX}} \right\rceil$, where if a slot n belongs to the set $(t'^{SL}_0, t'^{SL}_1, t'^{SL}_2, ...)$, $t^{SL}_{n'} = n$, otherwise $t^{SL}_{n'}$ is the first slot belonging to $(t'^{SL}_0, t'^{SL}_1, t'^{SL}_2, ...)$ after the slot n; otherwise Q = 1. $T_{scal}$ is a value converted from $T_2$ in units of milliseconds. $C_{resel}$ is the number of PSSCH transmission opportunities to be selected. $(t'^{SL}_0, t'^{SL}_1, t'^{SL}_2, ...)$ represents the set of logical slots included in the current resource pool.

Operation 7), if the number of single slot resources remaining in the set $S_A$ is less than $X \cdot M_{total}$, the terminal device increases the value of $Th(p_i, p_j)$ by 3dB and performs the operation 4).

The physical layer of the terminal device report the $S_A$ to the media access control (MAC) layer.

### Downlink-based positioning

In downlink-based positioning, parameter configuration for a downlink positioning reference signal (DL PRS) may include four layers of configuration, from high to low, namely, positioning frequency layer, TRP layer, PRS resource set, and PRS resource. The following is a detailed description of the parameter configuration for the DL PRS.

The network device may provide DL PRS configurations of four positioning frequency layers for the terminal device. Where parameter structures of each of the positioning frequency layers provide the following configuration parameters of the DL PRS: subcarrier spacing of the DL PRS; cyclic prefix (CP) length of the DL PRS; frequency domain resource bandwidth of the DL PRS; frequency domain start frequency position of the DL PRS resource; frequency domain reference point "Point A" of the DL PRS; and comb size "Comb-N" of the DL PRS.

The value of the frequency domain resource bandwidth of the DL PRS may be the number of PRBs allocated to the DL PRS. In some cases, the minimum value of the frequency domain resource bandwidth of the DL PRS may be 24 PRBs, and the granularity may be 4 PRBs. The maximum value of the frequency domain resource bandwidth of the DL PRS may be 272 PRBs.

The frequency domain start frequency position of the DL PRS resource is configured to indicate the index number of the start PRB of the DL PRS in the frequency domain resource allocation. The index number of the PRB is defined relative to the DL PRS frequency domain reference point "Point A" of the DL PRS.

For each of the positioning frequency layers, the above configuration parameters of the DL PRS corresponding to the positioning frequency layer may be applied to all DL PRS resources included in this positioning frequency layer. That is to say, in one positioning frequency layer, all DL PRSs from multiple different TRPs may use the same subcarrier spacing and CP length, the same comb size, may be transmitted on the same frequency subband, and may occupy the same bandwidth. Such a design may support the terminal device to simultaneously receive and measure DL PRSs from the multiple different TRPs on the same frequency point.

In some scenarios, the parameters of the TRP layer may include an ID parameter for uniquely identifying and positioning the TRP, such as physical cell ID of the TRP, NR cell global identifier (NCGI) of the TRP, absolute radio frequency channel number (ARFCN) of the TRP, etc. Typically, up to 2 DL PRS resource sets may be configured in each TRP layer.

For each of the DL PRS resource set, configuration parameters of the DL PRS resource set may be applied to all DL PRS resources included in the DL PRS resource set. The configuration parameters of the DL PRS resource set include one or more of the following parameters: identification (ID) of the DL PRS resource set (represented by "*nr-DL-PRS-ResourceSetID*"); transmission period and slot offset of DL PRS (represented by *"dl-PRS-Periodicity-and-Resource-SetSlotOffset"*); repetition factor of DL PRS resources (represented by *"dl-PRS-ResourceRepetitionFactor"*); repeated transmission time gap of DL PRS resources (represented by *"dl-PRS-ResourceTimeGap"*); muting configuration of DL PRS; and the number of OFDM symbols occupied by the DL PRS resources (represented by *"dl-PRS-NumSymbols"*).

The transmission period and slot offset of DL PRS are used to indicate the time domain transmission behavior of all DL PRS resources in the DL PRS resource set. In some implementations, the minimum value of the transmission period of the configurable DL PRS is 4 milliseconds, and the maximum value of the transmission period of the configurable DL PRS is 10240 milliseconds. Currently, the configuration of the DL PRS supports flexible subcarrier spacing including 15 KHz, 30 KHz, 60 KHz and 120 KHz. In a case of different subcarrier spacing, the value range of the transmission period of the configurable DL PRS may be the same. FIG. 5 is a schematic diagram illustrating resources for transmitting a DL PRS when the comb size is 2 and the resource element (RE) offset is 0 or 1 respectively.

The repetition factor of the DL PRS resources is used to indicate the number of repeated transmissions of the DL PRS resources in each of the DL PRS transmission period. Currently, repeated transmission of the same DL PRS resource may be used by the terminal devices to aggregate the DL PRS energy of the multiple transmissions, which helps to increase the coverage distance of the DL PRS and improve positioning accuracy. In an FR2 system, the repeated transmission of the DL PRS resources may also be used by the terminal device to perform operations of receiving beam scanning. The terminal device may use different receiving beams to receive repeated transmissions of the same DL PRS resource, thereby finding the best match between the TRP transmitting beam and the terminal device receiving beam. On the other hand, the repeated transmission of the DL PRS resources will increase the transmission overhead of the DL PRS. In order to control the transmission overhead, the repetition factor of the DL PRS resources is set to 1, 2, 4, 6, 8, 16 and 32 in the 3GPP NR R16 specification.

The repeated transmission time gap of the DL PRS resources is used to indicate the number of slots between two consecutive repeated transmissions of the same DL PRS resource.

The muting configuration of the DL PRS is used to instruct the DL PRS not to transmit the DL PRS on certain allocated time-frequency resources. The muting configuration may be understood as that the DL PRS is not transmitted on all allocated time-frequency resources, but is intentionally not transmitted on certain designated time-frequency resources. On the one hand, the muting configuration may avoid conflicts between the DL PRS and other signals (such as an SSB). On the other hand, the muting configuration may avoid interference between signals transmitted from different TRPs. For example, the muting configuration may instruct the TRP that is relatively close to the terminal device not to transmit the DL PRS, and configure the TRP that is relatively away from the terminal device to transmit the DL PRS. In this way, the terminal device will not be interfered by the TRP instructed to be muting, but may receive the DL PRS from the farther TRP.

The number of OFDM symbols occupied by the DL PRS resources is used to indicate the number of OFDM symbols allocated to one DL PRS resource in one slot.

Generally, the configuration parameters of the DL PRS included in the above parameters of the TRP layer may be applied to all DL PRS resources in the DL PRS resource set corresponding to the TRP layer. Therefore, the DL PRS resources belonging to the same DL PRS resource set will transmit the DL PRS with the same transmission period and the same number of repeated transmissions, and the DL PRS will occupy the same number of OFDM symbols.

In some implementations, for each of the DL PRS resources, the configuration parameters of the DL PRS may also include: resource identification (ID) of the DL PRS (represented by *"nr-DL-PRS-ResourceID"*); sequence ID of the DL PRS (represented by *"dl-PRS-SequenceID"); start frequency domain resource unit offset of the DL PRS (represented by *"dl-PRS-CombSizeN-AndReOffset"*); resource slot offset of the DL PRS (represented by *"dl-PRS-ResourceSlotOffset"*); OFDM symbol offset of the DL PRS (represented by *"dl-PRS-ResourceSymbolOffset"*); quasi co-location (QCL) information of the DL PRS (represented by *"dl-PRS-QCL-Info"*).

The start frequency domain resource unit offset of the DL PRS is used to indicate the frequency domain resource unit offset value used for resource mapping on the first allocated OFDM symbol of the DL PRS resources in a slot. Generally, based on the parameter and the relative offset value defined in TS38.211, the terminal device may determine the frequency domain resource unit offset value used for resource mapping on each of the OFDM symbols.

The resource slot offset of the DL PRS is used to indicate a slot offset relative to a DL PRS resource set. This parameter may determine the slot position of each of the DL PRS resources.

The OFDM symbol offset of the DL PRS is used to indicate the time-frequency resource allocation position of the DL PRS resource within a slot. The parameter may be used to indicate the index number of a start OFDM symbol in a slot.

The QCL information of the DL PRS is used to indicate the QCL information of the DL PRS.


## SL-U

When the sidelink transmission is performed on an unlicensed spectrum, the sidelink transmission needs to meet specific regulatory requirements, including a minimum occupied channel bandwidth (OCB) requirement and a maximum power spectral density (PSD) requirement. For the OCB requirement, when the UE uses the channel to perform data transmission, the occupied channel bandwidth should not be less than 80% of the channel bandwidth; for the maximum power spectral density requirement, the power transmitted from the UE per 1 MHz should not exceed 10 dBm. In order to meet the OCB regulatory requirement and the PSD regulatory requirement, an interlaced resource block (IRB) structure is required for the sidelink transmission in the unlicensed spectrum. An IRB includes N RBs discretized in the frequency domain. The frequency band includes a total of M IRBs, and RBs included in the m-th IRB is {m, M+m, 2M+m, 3M+m, ...}.

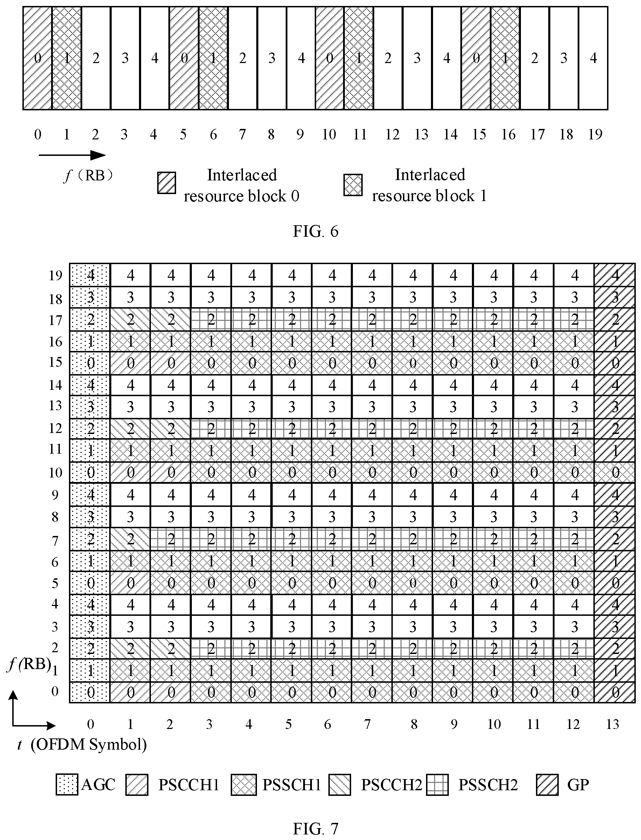

FIG. 6 illustrates a schematic structural diagram of interlaced resource blocks. As illustrated in FIG. 6, the system bandwidth includes 20 RBs, and includes 5 IRBs (i.e., M=5). Each of the IRBs includes 4 RBs (i.e., N=4), and the frequency domain intervals of two adjacent RBs belonging to the same IRB are the same, that is, two adjacent RBs belonging to the same IRB are 5 RBs apart. The numbers in the boxes in FIG. 6 represent the IRB indexes.

In the SL-U system, if the IRB-based resource allocation granularity is adopted, the PSCCH and PSSCH channels of the SL-U system should be based on the IRB structure. FIG. 7 illustrates an exemplary diagram of a frame structure of an SL-U system, where the exemplary diagram of the frame structure of FIG. 7 is an exemplary diagram of a frame structure that includes only PSCCH and PSSCH but does not include PSFCH in a slot. As illustrated in FIG. 7, the bandwidth includes 20 RBs, and 5 IRB resources are configured (i.e., M=5). Each of the IRB resources includes 4 RBs, and the numbers in the boxes represent IRB indexes. In FIG. 7, the system configures that the PSCCH occupies 1 IRB resource and occupies 2 OFDM symbols in the time domain; and the PSSCH is IRB granularity. The first symbol in the slot is an AGC symbol, and the last symbol is a GP symbol. In FIG. 7, a PSSCH 1 occupies IRB#0 and IRB#1, and a PSCCH 1 corresponding to the PSSCH 1 occupies IRB#0. A PSSCH 2 occupies IRB#2, and a PSCCH 2 corresponding the PSSCH 2 also occupies IRB#2. It should be noted that, for simplicity, FIG. 7 does not illustrate the resources occupied by the second-order SCI and the resources occupied by the PSCCH DMRS and the PSSCH DMRS.

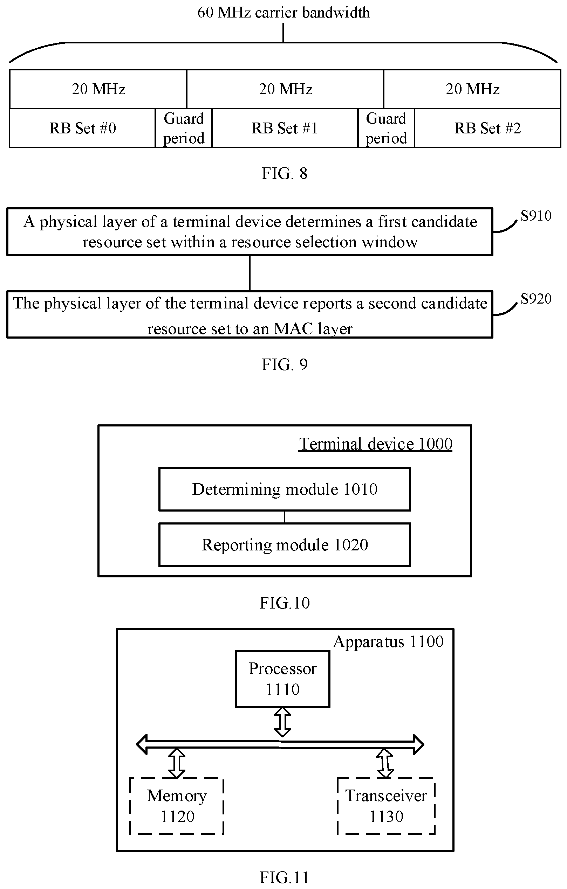

On the unlicensed spectrum, UE may access the channel via listen before talk (LBT). The LBT takes 20 MHz as the granularity in the frequency domain, and every 20 MHz may be referred to be an RB Set. One carrier may include multiple RB Sets, and there are guard periods between RB Sets, as illustrated in FIG. 8.

On the unlicensed spectrum, the UE needs to perform the LBT first, and may access the channel only after passing LBT. However, the time for the UE to complete the LBT is uncertain. In some implementations, if the UE is restricted to start transmission only from the beginning of a slot, the UE may miss the transmission opportunity because of failing to complete the LBT before the beginning of the slot. Therefore, in the SL-U, it is considered to add a transmission start point in a slot, that is, multi-start point transmission. For example, the additional start point may be the 3rd or 4th OFDM symbol in the slot.

## **Positioning based on sidelink**

In 3GPP R-17, 3GPP RAN conducted studies on positioning based on sidelink. For example, "NR positioning enhancement" and "scenarios and requirements for NR positioning use cases in coverage, in partial coverage and out of coverage" are studied. Where the studies on "scenarios and requirements for NR positioning use cases in coverage, in partial coverage and out of coverage" focuses on V2X and public safety use cases. In addition, some organizations (such as 3GPP SA1 work group) have also developed requirements for "ranging-based services" and have developed positioning accuracy requirements for IoT use cases in out-of-coverage scenarios. 3GPP requires to study and develop positioning solutions based on sidelink to support the use cases, scenarios and requirements determined in these activities.

In order to improve positioning accuracy, especially to achieve positioning of UEs out the coverage of a cellular network, the 3GPP has completed the feasibility and performance studies of positioning technology based on sidelink positioning reference signal in the early stage of R18. Next, solutions based on sidelink positioning (including ranging/direction) in the NR system will be standardized. The solution based on sidelink positioning mainly includes the following aspects of standardization work.

Standardization work 1: Standardization of a sidelink positioning reference signal (SL PRS). The SL PRS may use a frequency domain structure based on a comb (not excluding a full RE mapping mode) and adopt a sequence format based on a pseudo-random sequence. The SL PRS may take the existing DL-PRS sequence as a designed start point, and support an SL PRS bandwidth up to 100 MHz in FR1.

Standardization work 2: Standardization of measurement quantities used for sidelink positioning. For example, measurement quantities are standardized to support SL RTT (Sidelink-Round-Trip Time), SL-AOA (Sidelink-Angle of Arrival) and SL-TDOA (Sidelink-Time Difference of Arrival) positioning methods.

Standardization work 3: Standardization of resource allocation solutions of the SL PRS. For example, the resource allocation solutions of the SL PRS include resource allocation solution 1 and solution 2, where the solution 1 corresponds to the network allocating SL PRS resources, and the solution 2 corresponds to the UE autonomously selecting the SL PRS resources. In some implementations, the system supports a shared resource pool for the SL PRS and Rel-16/17/18 sidelink communications and a dedicated resource pool for the SL PRS. In some implementations, for the solution 2, one or more of the following needs to be studied and standardized: resource selection based on channel sensing, random resource selection, congestion control, and resource selection based on UE coordination.

Standardization work 4: Standardization of open-loop power control mechanism of SL PRS transmission, etc.

In the second resource selection mode, the physical layer of the terminal device takes single slot resources as resource units when performing resource exclusion, that is, each element in a candidate resource set and a resource set finally reported to the MAC layer is a single slot resource. The single slot resource is a resource consisting of L_subch consecutive subchannels in a slot. However, in SL PRS resource selection, there may be multiple time-division SL PRS resources in a slot, and the configurations of different SL PRS resources may also be different. How the terminal device should select and reserve the SL PRS resources is an unresolved issue.

For the above problems, the embodiments of the present disclosure are described in detail below.

The embodiments of the present disclosure may be applicable to a licensed spectrum, and may also be applicable to an unlicensed spectrum.

The SL PRS resource mentioned in the embodiments of the present disclosure may refer to a time-frequency resource used for the SL PRS transmission in a slot.

In some embodiments, an SL PRS resource may include one or more of the following characteristics: an identifier (ID) of the SL PRS resource, a comb size and RE offset of the SL PRS transmitted within the SL PRS resource, a start OFDM symbol of the SL PRS resource in a slot and the number of consecutive OFDM symbols occupied, and an RB occupied by the SL PRS resource in the OFDM symbol.

In some embodiments, SL PRS resources in a resource pool may be determined based on configuration information of a network device.

In some embodiments, SL PRS resources in a resource pool may be determined based on pre-configuration information.

In some embodiments, the configuration information or pre-configuration information of the network device may indicate all of the above characteristics of the SL PRS resource.

In some embodiments, the configuration information or pre-configuration information of the network device may indicate some of the above characteristics of the SL PRS resource. As an example, the configuration information or pre-configuration information of the network device may indicate the ID of the SL PRS resources, the comb size and RE offset of the SL PRS transmitted in the SL PRS resources, the start OFDM symbol of the SL PRS resources in the slot and the number of consecutive OFDM symbols occupied, but does not explicitly indicate the RBs occupied by the SL PRS resources. In this case, the RBs occupied by the SL PRS resources may be the same as the RBs configured in the resource pool.

FIG. 9 is a schematic flowchart of a resource selection method provided in the embodiments of the present disclosure. The method of FIG. 9 may be applicable to an autonomous resource selection mode of the terminal device, that is, the second resource selection mode mentioned above. The method of FIG. 9 includes an operation S910 and an operation S920. The operations are illustrated in detail below.

In the operation S910, a physical layer of the terminal device determines a first candidate resource set within a resource selection window.

In some embodiments, before the operation S910, a higher layer (such as a MAC layer) of the terminal device may transmit one or more parameters related to the SL PRS transmission to the physical layer of the terminal device. The parameter may be used to select the first candidate resource set.

For example, the higher layer of the terminal device (such as the MAC layer) may transmit one or more of the following parameters to the physical layer of the terminal device: a resource pool to which the first candidate resource set belongs (hereinafter referred to as the first resource pool), a physical layer priority ($prio_{TX}$), a remaining tolerable SL PRS transmission delay, and a resource reservation period $P_{rsvp\_TX}$ (in units of milliseconds (ms)). Furthermore, if the higher layer of the terminal device (such as the MAC layer) provides the reservation period $P_{rsvp\_TX}$ (in units of ms) of the SL PRS resources, $P_{rsvp\_TX}$ may be converted into the number of logical slots $P'_{rsvp\_TX}$ .

In some embodiments, the resource selection window may be $[n + T_1, n + T_2]$.

In some embodiments, $0 \leq T_1 \leq T_{proc,1}$. Further, in some embodiments, a value of $T_1$ may be determined by the implementation of the terminal device.

In some embodiments, a value of $T_{proc,1}$ is associated with the subcarrier spacing. For example, when the subcarrier spacing is 15 kHz, the value of $T_{proc,1}$ is 3 slots; when the subcarrier spacing is 30 kHz, the value of $T_{proc,1}$ is 5 slots; when the subcarrier spacing is 60kHz, the values of $T_{proc,1}$ is 9 slots; and when the subcarrier spacing is 120 kHz, the values of $T_{proc,1}$ is 17 slots.

In some embodiments, if $T_{2min}$ is less than a remaining tolerable SL PRS transmission delay D in units of slots, then $T_{2min} \leq T_2 \leq D$. Further, in some embodiments, a value of $T_2$ may be determined by the implementation of the terminal device.

In some embodiments, if $T_{2min}$ is greater than or equal to the remaining tolerable SL PRS transmission delay D in units of slots, $T_2$ is equal to D.

In some embodiments, a value of D may be indicated by the higher layer (such as MAC layer) of the terminal device.

In some embodiments, a value of $T_{2min}$ may be associated with the subcarrier spacing. For example, a value set of $T_{2min}$ is $\{1, 5, 10, 20\} \times 2^{\mu}$ slots, where $\mu = 0$ corresponds to a case in which the subcarrier spacing is 15 kHz; where $\mu = 1$ corresponds to a case in which the subcarrier spacing is 30 kHz; where $\mu = 2$ corresponds to a case in which the subcarrier spacing is 60 kHz; and where $\mu = 3$ corresponds to a case in which the subcarrier spacing is 120 kHz. Furthermore, in some embodiments, the terminal device may determine $T_{2min}$ from the value set according to the priority $prio_{TX}$ of its own data to be transmitted.

In some embodiments, the first candidate resource set may be represented by $S_A$. The first candidate resource set may also be referred to as an SL PRS resource subset.

In some embodiments, resources in the first candidate resource set are SL PRS resources in the first resource pool.

In some embodiments, SL PRS resources are configured or preconfigured in each slot in the first resource pool, and the PRBs occupied by the configured or preconfigured SL PRS resources are the same as the PRBs included in the resource pool.

In some embodiments, the first candidate resource set may be an initialized candidate resource set, that is, a resource set prior to resource exclusion.

In some embodiments, the resources in the first candidate resource set are SL PRS resources within the resource selection window. For example, the resources in the first candidate resource set are part or all of the SL PRS resources in the first resource pool belonging to the resource selection window.

In some embodiments, the resources in the first candidate resource set belong to a first resource pool, the first resource pool includes one or more slots within the resource selection window, and the first candidate resource set may include all SL PRS resources in the one or more slots. For example, the slots of the first resource pool within the resource selection window include a total of X slots (X is a positive integer greater than or equal to 1), and the first candidate resource set may include all SL PRS resources in the X slots.

In some embodiments, the SL PRS resources in the one or more slots are determined based on configuration information or pre-configuration information of the network device. That is to say, the candidate SL PRS resources may be all SL PRS resources configured/preconfigured in the slots belonging to the first resource pool within the resource selection window. The manner of determining the candidate resource set may maximize the number of candidate resources for the terminal device, thereby reducing the possibility of collision of resources from different terminal devices.

In some embodiments, the resources in the first candidate resource set are resources located within a specific OFDM symbol. Further, in some embodiments, the specific OFDM symbol may be indicated by the higher layer (such as MAC layer) of the terminal device.

In some embodiments, the resources in the first candidate resource set are SL PRS resources determined based on first indication information of the MAC layer. For example, the MAC layer may transmit first indication information to the physical layer of the terminal device, where the first indication information is used to indicate the SL PRS resource ID. As an example, SL PRS resources are configured or preconfigured in each slot in the first resource pool, and each SL PRS resource configured/preconfigured in the slot corresponds to a unique SL PRS resource ID. The higher layer (MAC layer) of the terminal device may request the physical layer of the terminal device to determine the first candidate resource set, and use the first indication information to indicate one or more SL PRS resource IDs that may be included in the first candidate resource set. Accordingly, when the physical layer of the terminal device determines the first candidate resource set, the first candidate resource set may be initialized as the SL PRS resources corresponding to one or more SL PRS resource IDs indicated by the higher layer (MAC layer) of the terminal device in the slot belonging to the first resource pool within the resource selection window $[n + T_1, n + T_2]$.

In some embodiments, the resources in the first candidate resource set are SL PRS resources within the resource selection window that meet the first condition. The first condition may be set according to actual positioning requirements, which is not limited in the embodiments of the present disclosure. The first condition may be set, for example, by the higher layer of the terminal device. By setting the first condition, the higher layer of the terminal device can exclude, from the first candidate resource set, the SL PRS resources not meeting the positioning requirements among the configured/pre-configured SL PRS resources, thereby improving the positioning accuracy.

In some embodiments, the first condition may be associated with one or more of the following: the number of symbols occupied by the SL PRS resources; a comb size corresponding to the SL PRS resources; and a bandwidth occupied by the SL PRS resources.

For example, the first condition may include that the number of symbols occupied by the SL PRS resources being greater than or equal to a first threshold.

For another example, the first condition may include that the number of symbols occupied by the SL PRS resources being less than or equal to a second threshold.

For another example, the first condition may include that the comb size corresponding to the SL PRS resources being greater than or equal to a third threshold.

For another example, the first condition may include that the comb size corresponding to the SL PRS resources being less than or equal to a fourth threshold.

For another example, the first condition may include that the bandwidth occupied by the SL PRS resources being greater than or equal to a fifth threshold.

For another example, the first condition may include that the bandwidth occupied by the SL PRS resources being less than or equal to a sixth threshold.

The first threshold mentioned above may be determined based on indication information or pre-configuration information of the MAC layer, for example.

The second threshold mentioned above may be determined based on indication information or pre-configuration information of the MAC layer, for example.

The third threshold mentioned above may be determined based on indication information or pre-configuration information of the MAC layer, for example.

The fourth threshold mentioned above may be determined based on indication information or pre-configuration information of the MAC layer, for example.

The fifth threshold mentioned above may be determined based on indication information or pre-configuration information of the MAC layer, for example.

The sixth threshold mentioned above may be determined based on indication information or pre-configuration information of the MAC layer, for example.

It should be noted that the first condition may be a combination of the conditions described above. Two more specific examples are given below.

First example: The first condition includes that the number of symbols occupied by the SL PRS resources being greater than or equal to the first threshold, and the comb size corresponding to the SL PRS resources being less than or equal to the fourth threshold.

In the example, SL PRS resources are configured/pre-configured in each slot in the first resource pool. Different SL PRS resources may include different numbers of OFDM symbols and may use different comb sizes. The higher layer of the terminal device may indicate, when requesting the physical layer of the terminal device to determine the first candidate resource set $S_A$, the minimum number of OFDM symbols M (i.e., the first threshold) of the candidate SL PRS resources and the maximum comb size N (i.e., the fourth threshold) of the candidate SL PRS resources. When the first candidate resource set $S_4$ is determined, the first candidate resource set $S_A$ is initialized as the SL PRS resources whose number of occupied OFDM symbols is greater than or equal to M and comb size is less than or equal to N in the slot belonging to the first resource pool within the resource selection window $[n + T_1, n + T_2]$. By the resource indication manner, the higher layer of the terminal device can exclude, from the first candidate resource set $S_A$, the SL PRS resources not meeting the positioning requirements in the configured/pre-configured SL PRS resources, thereby improving the positioning accuracy.

Second example: The first condition includes one or more of the following: the number of symbols occupied by the SL PRS resources being greater than or equal to the first threshold, the comb size corresponding to the SL PRS resources being less than or equal to the fourth threshold, and the bandwidth occupied by the SL PRS resources being greater than or equal to the fifth threshold.

In the example, SL PRS resources are configured/pre-configured in each slot in the first resource pool. Different SL PRS resources may include different numbers of OFDM symbols and use different comb sizes. Moreover, different SL PRS resources may occupy different numbers of PRBs (the bandwidth may be represented by the number of PRBs). The higher layer of the terminal device may, when requesting the physical layer of the terminal device to determine the first candidate resource set $S_A$, indicate one or more of the minimum number of OFDM symbols M (i.e., the first threshold) of the first candidate resource set $S_A$, the maximum comb size N (i.e., the fourth threshold) of the first candidate resource set $S_A$, and the minimum number of PRBs B (i.e., the fifth threshold) of the first candidate resource set $S_A$. When the first candidate resource set $S_A$ is determined, the first candidate resource set is initialized as the SL PRS resources whose number of occupied OFDM symbols is greater than or equal to M, and/or comb size is less than or equal to N, and/or the bandwidth is greater than or equal to B, in the slot belonging to the first resource pool within the resource selection window $[n + T_1, n + T_2]$.

Continuing to refer to FIG. 9, in the operation S920, the physical layer of the terminal device reports a second candidate resource set to the MAC layer of the terminal device. The second candidate resource set may include part or all of the resources in the first candidate resource set.

In some embodiments, the second candidate resource set is a candidate resource set obtained after performing resources exclusion in the first candidate resource set.

In some embodiments, the SL PRS resources r excluded from the first candidate resource set may be SL PRS resources r meeting the following first condition and second condition.

First condition: The terminal device does not sense the slot $t'^{SL}_m$ in the resource sensing window, and for the number of logical slots P corresponding to any allowed resource reservation period configured or pre-configured in the first resource pool.

Second condition: The slot in which the SL PRS resource r is located is $t'^{SL}_{m+P}$.

In some embodiments, the SL PRS resources r excluded from the first candidate resource set may be SL PRS resources r meeting the following conditions a to c.

Condition a: The terminal device receives an SCI format F in the slot $t'^{SL}_m$, and a 'Resource reservation period' field (if exists) and a 'Priority' field indicated by the SCI format F are indicated as $P_{rsvp\_RX}$ and $prio_{RX}$ respectively, where the SCI format F is an SCI format used to indicate the SL PRS transmission.

Condition b: The RSRP measured for the received SCI is higher than $Th(prio_{RX}, prio_{TX})$, where the $Th(prio_{RX}, prio_{TX})$ is an RSRP threshold determined by the terminal device based on the $prio_{TX}$, the $prio_{RX}$ and configuration information or pre-configuration information of the network device. The RSRP measured for the received SCI mentioned here may be the RSRP measured on the DMRS of the PSCCH carrying the SCI, or the RSRP measured on the SL PRS indicated by the SCI.

Condition c: When the SL PRS resources reserved by the SCI format F received in the slot $t'^{SL}_m$ overlap with the SL PRS resources *r*, or when the 'Resource reservation period' field exists in the received SCI format F, it is assumed that the SCI indication of the same format received in the slot $t^{SL}_{m+q \times P'_{rsvp\_RX}}$ overlaps with the reserved resources and the SL PRS resources *r*. Where q=1, 2, ..., Q, j=0, 1, ..., $C_{resel}$ - 1. Here, $P'_{rsvp\_RX}$ is the number of logical slots converted from $P_{rsvp\_RX}$; if $P_{rsvp\_RX}$ < $T_{scal}$, and $n'$ - m ≤ $P'_{rsvp\_RX}$, $Q = \left\lceil \frac{T_{scal}}{P_{rsvp\_RX}} \right\rceil$, where if a slot n belongs to the set $(t'^{SL}_0, t'^{SL}_1, t'^{SL}_2, ...), t^{SL}_{n'} = n$, otherwise $t^{SL}_{n'}$ is the first slot belonging to $(t'^{SL}_0, t'^{SL}_1, t'^{SL}_2, ...)$ after the slot n; otherwise Q = 1. $T_{scal}$ is a value converted from $T_2$ in units of milliseconds. $C_{resel}$ is the number of SL PRS transmission opportunities to be selected. $(t'^{SL}_0, t'^{SL}_1, t'^{SL}_2, ...)$ represents the set of logical slots included in the resource pool R.

Because there may be in-band leakage interference between SL PRS resources occupying different RE offsets in the same OFDM symbol, so if one SL PRS resource is excluded because it is occupied by other terminal devices, other resources may also be unusable due to in-band leakage interference. Therefore, in some embodiments, resources excluded from the first candidate resource set may include a first resource, where the first resource is a resource indicated or reserved by a first SCI (that is, the first resource is excluded because it is occupied by other terminal devices). Furthermore, in order to reduce in-band leakage interference, a second resource may also be excluded. The second resource and the first resource occupy the same symbol, and an RE offset corresponding to the second resource is different from an RE offset corresponding to the first resource.

Alternatively, in some embodiments, whether to exclude the second resource is determined based on a measurement result for the first SCI (such as measurement result of received signal strength indication, RSSI).

For example, a measurement result of the RSRP for the first SCI by the terminal device excludes the first resource (for details on the excluding manner of the first resource, please refer to the above conditions a to c). Next, the terminal device may further measure RSSI for the received first SCI. The RSSI for the received SCI mentioned here may be defined as average received energy measured on the bandwidth and one or more OFDM symbols in which the SL PRS indicated by the first SCI is located. If the RSSI is greater than or equal to a seventh threshold, the terminal device may further exclude the second resource occupying an RE offset that is different from an RE offset of the first resource within the OFDM symbol occupied by the first resource. The seventh threshold may be determined by configuration information or pre-configuration information of the network device.

Alternatively, in some embodiments, whether to exclude the second resource may be determined based on the implementation of the terminal device.

Because multiple SL PRS resources may be associated with the same PSCCH resource, if one SL PRS resource among the multiple SL PRS resources is excluded, it may mean that the PSCCH resource associated with the multiple SL PRS resources is occupied. Therefore, in some embodiments, the terminal device may exclude part or all of the remaining SL PRS resources in the multiple SL PRS resources. For example, the resources excluded from the first candidate resource set may include a third resource. The third resource may be excluded because the terminal device does not sense a certain slot in the resource sensing window, or may be excluded because the third resource is occupied by other terminal devices. If the third resource and a fourth resource are associated with the same PSCCH, the fourth resource may be excluded from the first candidate resource set.

The embodiments of the present disclosure does not specifically limit a triggering condition for the physical layer of the terminal device described in the operation S910 to determine the first candidate resource set within the resource selection window. The terminal device may be triggered when the terminal device needs to use SL PRS resources to transmit the SL PRS, or the terminal device may also be triggered when the SL PRS resources associated with a first sidelink grant do not meet a certain condition (hereinafter referred to as the second condition). The first sidelink grant mentioned here may be the sidelink grant that has been selected by the terminal device for the SL PRS transmission.

In some embodiments, the second condition may be associated with one or more of the following: transmission time corresponding to the PSCCH in one or more transmission opportunities of the SL PRS; and active time of discontinuous reception (DRX) of a receiving device of the SL PRS; where the one or more transmission opportunities of the SL PRS (such as multiple consecutive transmission opportunities of the SL PRS) are associated with a first sidelink grant (SL grant) (or the one or more transmission opportunities are one or more transmission opportunities included in the first sidelink grant). For example, the second condition includes that transmission time corresponding to the PSCCH in the one or more transmission opportunities does not belong to the active time of the DRX. The active time of the DRX may refer to SL DRX active time.

In some embodiments, the second condition may be that the SL PRS resource associated with the first sidelink grant does not match a first SL PRS to be transmitted. In other words, the SL PRS resource associated with the first sidelink grant cannot meet the requirements of the first SL PRS to be transmitted.

For example, the second condition may include one or more of the following: a period of one or more transmission opportunities of the SL PRS associated with the first sidelink grant not matching a period of the first SL PRS; the number of symbols included in one or more SL PRS resources (or any SL PRS resource) associated with the first sidelink grant not matching the number of symbols occupied by the first SL PRS; and a comb size of one or more SL PRS resources (or any SL PRS resource) associated with the first sidelink grant not matching a comb size corresponding to the first SL PRS.

The period of one or more transmission opportunities of the SL PRS associated with the first sidelink grant not matching the period of the first SL PRS may include: the period of one or more transmission opportunities of the SL PRS associated with the first sidelink grant being greater than the period of the first SL PRS. Alternatively, the period of one or more transmission opportunities of the SL PRS associated with the first sidelink grant not matching the period of the first SL PRS may include: the period of one or more transmission opportunities of the SL PRS associated with the first sidelink grant being less than the period of the first SL PRS.

The number of symbols included in one or more SL PRS resources associated with the first sidelink grant not matching the number of symbols occupied by the first SL PRS may include: the number of OFDM symbols included in any SL PRS transmission resource associated with the first sidelink grant being less than the number of OFDM symbols required by the first SL PRS.

The comb size of one or more SL PRS resources associated with the first sidelink grant not matching the comb size corresponding to the first SL PRS may include: the comb size of one or more SL PRS resources associated with the first sidelink grant being larger than the comb size required by the first SL PRS. Alternatively, the comb size of one or more SL PRS resources associated with the first sidelink grant not matching the comb size corresponding to the first SL PRS may include: the comb size of one or more SL PRS resources associated with the first sidelink grant being smaller than the comb size required by the first SL PRS.

As mentioned above, some or all of the resources in the first candidate resource set may be excluded for some reasons. In some embodiments, if the number of SL PRS resources remaining in the first candidate resource set is less than $X \cdot M_{total}$, the terminal device may increase a value of $Th(prio_{RX}, prio_{TX})$ (representing the RSRP threshold, refer to the description of the Condition b in the previous for details) by a certain value (such as increasing by 3 dB) and re-execute the operation of resource exclusion. $M_{total}$ may be the number of SL PRS resources included when the first candidate resource set is initialized.

The embodiments of the present disclosure are described in more detail below with reference to specific examples. It should be noted that the following examples are only intended to help those skilled in the art understand the embodiments of the present disclosure, and are not intended to limit the embodiments of the present disclosure to the specific numerical values or specific scenarios illustrated. It is obvious that those skilled in the art may make various equivalent modifications or changes based on the examples given, and such modifications or changes also fall within the scope of the embodiments of the present disclosure. It should be noted that, in the following examples, the first candidate resource subset mentioned above is referred as the SL PRS resource subset $S_A$, and the first resource pool mentioned above is referred as the resource pool R.

The terminal device in the present disclosure, when meeting one of the following conditions, may trigger SL PRS resource selection or reselection for an SL process (sidelink process) in a resource pool that has been selected.

Condition m: In a case that in the N consecutive SL PRS transmission opportunities included in the sidelink grant (SL grant) that have been selected for the SL PRS transmission, time in which the PSCCH for indicating the SL PRS transmission is located does not belong to DRX active time of a target receiving terminal of the SL PRS.

Condition n: In a case that the SL PRS transmission opportunities or SL PRS transmission resources included in the SL grant that have been selected for the SL PRS transmission cannot meet the requirements of the SL RPS to be transmitted.

For example, a period of the SL PRS transmission opportunities included in the SL grant selected for the SL PRS transmission is greater than a period of the SL PRS to be transmitted.

For another example, the number of OFDM symbols included in any SL PRS transmission resources included in the SL grant selected for SL PRS transmission is less than the number of OFDM symbols required by the SL PRS to be transmitted.

For another example, a comb size of any SL PRS transmission resource included in the SL grant selected for the SL PRS transmission is larger than a comb size required by the SL PRS to be transmitted.

In the example, for the autonomous resource selection mode of the terminal device, the higher layer of the terminal device may request the physical layer of the terminal device to determine the SL PRS resource subset, from which the higher layer of the terminal device will select resources for the SL PRS transmission. To trigger this process, in a slot n, the higher layer of the terminal device provides the physical layer with one or more of the following parameters related to the SL PRS transmission: a resource pool R of the resource subset, a physical layer priority ($prio_{TX}$), and a remaining tolerable SL PRS transmission delay.

Optionally, the higher layer of the terminal device may also provide the physical layer with a resource reservation period $P_{\text{rsvp\_TX}}$ (in units of ms).

If the higher layer of the terminal device provides the SL PRS resource reservation period $P_{\text{rsvp\_TX}}$ (in units of ms), the $P_{\text{rsvp\_TX}}$ may be converted into the number of logical slots $P'_{\text{rsvp\_TX}}$.

The operations for the physical layer of the terminal device to determine the SL PRS resource subset are as follows.

1) The terminal device determines the candidate SL PRS resources available to the terminal device in the slots belonging to the resource pool R within a time range [$n + T_1, n + T_2$].

- $0 \leq T_1 \leq T_{\text{proc},1}$, a specific value of $T_1$ is determined by the implementation of the terminal device. When the subcarrier spacing is 15 kHz, $T_{proc,1}$ is 3 slots; when the subcarrier spacing is 30 kHz, $T_{proc,1}$ is 5 slots; when the subcarrier spacing is 60 kHz, $T_{proc,1}$ is 9 slots; and when the subcarrier spacing is 120 kHz, $T_{proc,1}$ is 17 slots.
- If $T_{2min}$ is less than a remaining tolerable SL PRS transmission delay D in units of slots, the specific value of $T_2$ is determined by the implementation of the terminal device. Otherwise, $T_2$ is equal to D, where a value of D is indicated by the higher layer of the terminal device. A value set of $T_{2min}$ is $\{1, 5, 10, 20\} \times 2^{\mu}$ slots, where $\mu = 0$ corresponds to a case in which the subcarrier spacing is 15 kHz; where $\mu = 1$ corresponds to a case in which the subcarrier spacing is 30 kHz; where $\mu = 2$ corresponds to a case in which the subcarrier spacing is 60 kHz; and where $\mu = 3$ corresponds to a case in which the subcarrier spacing is 120 kHz. The terminal device determines $T_{2min}$ from the value set according to the priority $prio_{TX}$ of its own data to be transmitted.

The total number of candidate SL PRS resources available to the terminal device in the slots belonging to resource pool R within [$n + T_1, n + T_2$] is $M_{\text{total}}$.

2) The resource sensing window is determined and resource sensing is performed. The resource sensing window may be defined in the manners described in the section "Second resource selection mode in NR SL".

3) The set $S_A$ is initialized to the $M_{\text{total}}$ candidate SL PRS resources.

4) If the following conditions are met, the terminal device should exclude candidate SL PRS resources r in the $S_A$:

- The terminal device does not sense the slot $t'^{SL}_m$ in 2);
- For the number of logical slots P corresponding to any allowed resource reservation period configured/preconfigured in the resource pool, the slot in which the candidate SL PRS resource r is located is $t'^{SL}_{m+P}$.

5) If the following conditions are met, the terminal device should exclude the candidate SL PRS resources r in the $S_A$:

a) The terminal device receives an SCI format F in the slot $t'^{SL}_m$, where an indicated 'Resource reservation period' field (if exists) and a 'Priority' field are indicated as $P_{\text{rsvp\_RX}}$ and $prio_{RX}$ respectively, where the SCI format F is an SCI format used to indicate the SL PRS transmission.

b) The RSRP measured for the received SCI is higher than $Th(prio_{RX}, prio_{TX})$, where the $Th(prio_{RX}, prio_{TX})$ is an RSRP threshold determined by the terminal device based on the $prio_{TX}$, the $prio_{RX}$ and configuration/pre-configuration of the network. The RSRP measured for the received SCI may be the RSRP measured on the DMRS of the PSCCH carrying the SCI, or the RSRP measured on the SL PRS indicated by the SCI.

c) When the SL PRS resources reserved by the SCI format F received in the slot $t'^{SL}_m$ overlap with r, or when the 'Resource reservation period' field exists in the received SCI format F, it is assumed that the SCI indication of the same format received in the slot $t^{SL}_{m+q \times P'_{rsvp\_RX}}$ overlaps with reserved resources and r. Where q=1, 2, ..., Q, j=0, 1, ..., $C_{resel}$ - 1. Here, $P'_{rsvp\_RX}$ is the number of logical slots converted from $P_{\text{rsvp\_RX}}$; if $P_{rsvp\_RX} < T_{scal}$ and

$$n' - m \leq P'_{rsvp\_RX}, \quad Q = \left\lceil \frac{T_{scal}}{P_{rsvp\_RX}} \right\rceil$$, where if a slot n belongs to the set $(t'^{SL}_0, t'^{SL}_1, t'^{SL}_2, \ldots), t^{SL}_{n'} = n$,

otherwise $t^{SL}_{n'}$ is the first slot belonging to $(t'^{SL}_0, t'^{SL}_1, t'^{SL}_2, \ldots)$ after the slot n; otherwise $Q = 1$. $T_{scal}$ is a value converted from $T_2$ in units of milliseconds. $C_{resel}$ is the number of SL PRS transmission opportunities to be selected. $(t'^{SL}_0, t'^{SL}_1, t'^{SL}_2, \ldots)$ represents the set of logical slots included in the resource pool R.

6) Because there may be in-band leakage interference between SL PRS resources occupying different RE offsets in the same OFDM symbol, so if one SL PRS resource is excluded because it is occupied by other terminal devices, other resources may also be unusable due to in-band leakage interference. Optionally, the terminal device may further measure the RSSI for the received SCI, the RSSI for the received SCI is defined as the average received energy measured on the bandwidth and over one or more OFDM symbols in which the SL PRS indicated by the SCI is located. If the RSSI is greater than a specific threshold, the terminal device may further exclude one or more SL PRS resources occupying a different RE offset from the resource r within the OFDM symbol in which the resource r is located. The specific threshold is configured or pre-configured by the network. Alternatively, the terminal device may exclude, based on an autonomous implementation, one or more SL PRS resources occupying a different RE offset from the SL PRS resource r within the OFDM symbol in which the resource r is located.

7) Because multiple SL PRS resources may be associated with the same PSCCH resource, if one SL PRS resource among the multiple SL PRS resources is excluded, it may mean that the PSCCH resource associated with the multiple SL PRS resources is occupied. Therefore, optionally, the terminal device may exclude the remaining SL PRS resources in the multiple SL PRS resources.

8) If the number of single slot resources remaining in the set $S_A$ is less than $X \cdot M_{total}$, the terminal device increases the value of $Th(prio_{RX}, prio_{TX})$ by 3 dB and performs the operation 3).

The physical layer of the terminal device report the $S_A$ (the final determined SL PRS resource subset) to the MAC layer.

In the example, the terminal device may determine, based on one of the following manners, the candidate SL PRS resources available to the terminal device in the slots belonging to the resource pool R within the resource sensing window $[n + T_1, n + T_2]$, or initialize the set $S_A$.

First manner: Candidate SL PRS resources are all SL PRS resources configured/preconfigured in the slots belonging to the resource pool within the resource sensing window

In the first manner, SL PRS resources are configured/pre-configured in each slot in the resource pool, and the PRBs occupied by the configured/pre-configured SL PRS resources are always the same as the PRB included in the resource pool. When the SL PRS resource subset is determined, the set $S_A$ is initialized as the SL PRS resources configured/preconfigured in the slots belonging to the resource pool R within the resource selection window $[n + T_1, n + T_2]$. The manner may maximize the number of candidate resources for the terminal device, thereby reducing the possibility of collision of resources transmitted from different terminal devices.

Second manner: Resources corresponding to the SL PRS resource ID indicated by the MAC layer of the terminal device

In the second manner, SL PRS resources are configured/pre-configured in each slot in the resource pool, and each SL PRS resource configured/pre-configured in the slot corresponds to a unique SL PRS resource ID. The higher layer of the terminal device, when requesting the physical layer of the terminal device to determine the first candidate resource set, indicates one or more SL PRS resource IDs that may be included in the candidate resource set. When the SL PRS resource subset is determined, the set $S_A$ is initialized as the SL PRS resource corresponding to one or more SL PRS resource IDs indicated by the higher layer of the terminal device in the slot belonging to the resource pool R within the resource selection window $[n + T_1, n + T_2]$.

Third manner: The number of occupied OFDM symbols is greater than or equal to M, and the comb size is less than or equal to N

In the third manner, SL PRS resources are configured/pre-configured in each slot in the resource pool. Different SL PRS resources may include different numbers of OFDM symbols and may use different comb sizes. The higher layer of the terminal device indicates, when requesting the physical layer of the terminal device to determine the SL PRS resource subset, the minimum number of OFDM symbols M of the candidate SL PRS resource and the maximum comb size N of the candidate SL PRS resource. When the SL PRS resource subset is determined, the set $S_A$ is initialized as the SL PRS resources whose number of occupied OFDM symbols is greater than or equal to M and the comb size is less than or equal to N in the slot belonging to the resource pool R within the resource selection window $[n + T_1, n + T_2]$. Alternatively, the set $S_A$ is initialized as the SL PRS resources whose effective comb size is larger than N2 in the slot belonging to the resource pool R within the resource selection window $[n + T_1, n + T_2]$, and the effective comb size is defined as the product of the comb size N of the SL PRS resource and the number of OFDM symbols M occupied by the SL PRS resource. By the manner, the higher layer of the terminal device can exclude, from the candidate resource set, the SL PRS resources not meeting the positioning requirements in the configured/pre-configured SL PRS resources, thereby improving the positioning accuracy.

Fourth manner: Resources whose bandwidth is greater than B

In the fourth manner, SL PRS resources are configured/pre-configured in each slot in the resource pool. Different SL PRS resources may include different numbers of OFDM symbols and may use different comb sizes. Moreover, different SL PRS resources may occupy different numbers of PRBs. The higher layer of the terminal device indicates, when requesting the physical layer of the terminal device to determine the SL PRS resource subset, one or more of the minimum number of OFDM symbols M of the candidate SL PRS resource, the maximum comb size N of the candidate SL PRS resource, and the minimum number of PRBs B of the candidate SL PRS resource. When the SL PRS resource subset is determined, the set $S_A$ is initialized as the SL PRS resources whose number of OFDM symbols is greater than or equal to M, and/or comb size is less than or equal to n, and/or bandwidth is greater than or equal to B, in the slot belonging to the resource pool R within the resource selection window $[n + T_1, n + T_2]$.

The advantage of the second manner to the fourth manner: the higher layer of the terminal device can exclude, from the candidate resource set, the SL PRS resources not meeting the positioning requirements in the configured/pre-configured SL PRS resources, thereby improving the positioning accuracy.

The method embodiments of the disclosure are described in detail above with reference to FIG. 1 to FIG. 9, and the apparatus embodiments of the disclosure are described in detail below with reference to FIG. 10 to FIG. 11. It should be understood that the description of method embodiments corresponds to the description of apparatus embodiments, so that the parts not described in detail may be referred to the previous method embodiments.

FIG. 10 is a schematic structural diagram of a terminal device provided in the embodiments of the present disclosure. The terminal device 1000 in FIG. 10 includes a determining module 1010 and a reporting module 1020.

The determining module 1010 may be configured for the physical layer of the terminal device to determine a first candidate resource set within a resource selection window, where resources in the first candidate resource set are sidelink positioning reference signal resources within the resource selection window.

The reporting module 1020 may be configured for the physical layer of the terminal device to report a second candidate resource set to an MAC layer of the terminal device, where the second candidate resource set includes part or all of the resources in the first candidate resource set.

In some embodiments, the resources in the first candidate resource set belong to a first resource pool, the first resource pool includes one or more slots located within the resource selection window, and the first candidate resource set includes all sidelink positioning reference signal resources in the one or more slots.

In some embodiments, the sidelink positioning reference signal resources in the one or more slots are determined based on configuration information or pre-configuration information of a network device.

In some embodiments, the resources in the first candidate resource set are resources located in specific OFDM symbols, where the specific OFDM symbols are indicated by a higher layer of the terminal device.

In some embodiments, the resources in the first candidate resource set are sidelink positioning reference signal resources determined based on the first indication information of the MAC layer.

In some embodiments, the first indication information is used to indicate an identifier of the sidelink positioning reference signal resources.

In some embodiments, the resources in the first candidate resource set are the sidelink positioning reference signal resources meeting a first condition within the resource selection window.

In some embodiments, the first condition is associated with one or more of the following: a number of symbols occupied by the sidelink positioning reference signal resources; a comb size corresponding to the sidelink positioning reference signal resources; and a bandwidth occupied by the sidelink positioning reference signal resources.

In some embodiments, the first condition includes one or more of the following: the number of symbols occupied by the sidelink positioning reference signal resources being greater than or equal to a first threshold; the number of symbols occupied by the sidelink positioning reference signal resources being less than or equal to a second threshold; the comb size corresponding to the sidelink positioning reference signal resources being greater than or equal to a third threshold; the comb size corresponding to the sidelink positioning reference signal resources being less than or equal to a fourth threshold; the bandwidth occupied by the sidelink positioning reference signal resources being greater than or equal to a fifth threshold; and the bandwidth occupied by the sidelink positioning reference signal resources is less than or equal to a sixth threshold.

In some embodiments, one or more of the first threshold, the second threshold, the third threshold, the fourth threshold, the fifth threshold and the sixth threshold are determined based on indication information of the MAC layer.

In some embodiments, the second candidate resource set is a candidate resource set obtained after excluding one or more resources from the first candidate resource set, the one or more resources include a first resource and a second resource, the first resource is a resource indicated or reserved by first SCI, the second resource occupies a same symbol as the first resource, and an RE offset corresponding to the second resource is different from an RE corresponding to the first resource.

In some embodiments, whether to exclude the second resource is determined based on one or more of the following: a measurement result for the first SCI; and an implementation of the terminal device.

In some embodiments, the measurement result is a measurement result of an RSSI for the first SCI.

In some embodiments, the measurement result indicates that the RSSI is greater than or equal to a seventh threshold, and the seventh threshold is determined based on configuration information or pre-configuration information of a network device.

In some embodiments, determining, by the physical layer of the terminal device, the first candidate resource set within the resource selection window includes: in a case where sidelink positioning reference signal resources associated with a first sidelink grant do not meet a second condition, determining, by the physical layer of the terminal device, the first candidate resource set, the first sidelink grant being a sidelink grant that has been selected by the terminal device for sidelink positioning reference signal transmission.

In some embodiments, the second condition is associated with one or more of the following: transmission time corresponding to a PSCCH in one or more transmission opportunities of the sidelink positioning reference signal; and the active time of a DRX of a receiving device of the sidelink positioning reference signal; where the one or more transmission opportunities of the sidelink positioning reference signal are associated with the first sidelink grant.

In some embodiments, the second condition includes that the transmission time corresponding to the PSCCH in the one or more transmission opportunities does not belong to the active time of the DRX.

In some embodiments, the one or more transmission opportunities are multiple consecutive transmission opportunities.

In some embodiments, the second condition is that the sidelink positioning reference signal resources associated with the first sidelink grant do not match the first sidelink positioning reference signal to be transmitted.

In some embodiments, the second condition includes one or more of the following: a period of one or more transmission opportunities of the sidelink positioning reference signal associated with the first sidelink grant not matching a period of the first sidelink positioning reference signal; a number of symbols included in one or more sidelink positioning reference signal resources associated with the first sidelink grant not matching a number of symbols occupied by the first sidelink positioning reference signal; and a comb size of one or more sidelink positioning reference signal resources associated with the first sidelink grant not matching a comb size corresponding to the first sidelink positioning reference signal.

FIG. 11 is a schematic structural diagram of an apparatus provided in the embodiments of the present disclosure. The dashed lines in FIG. 11 represent that the unit or module is optional. An apparatus 1100 may be configured to implement the method described in the above method embodiments. The apparatus 1100 may be a chip, a terminal device or a network device.

The apparatus 1100 may include one or more processors 1110. The processor 1110 may support the apparatus 1100 to implement the method described in the above method embodiments. The processor 1110 may be a general purpose processor or a special purpose processor. For example, the processor may be a central processing unit (CPU). Alternatively, the processor may be other general purpose processor, a digital signal processor (DSP), an application specific integrated circuit (ASIC), a field programmable gate array (FPGA) or other programmable logic device, a discrete gate or a transistor logic device, a discrete hardware component, etc. A general purpose processor may be a microprocessor, or the processor may be any conventional processor or the like.

The apparatus 1100 may also include one or more memories 1120. A program is stored on the memory 1120, the program may be executed by the processor 1110, enabling the processor 1110 to execute the method described in the above method embodiments. The memory 1120 may be independent of the processor 1110 or may be integrated into the processor 1110.

The apparatus 1100 may further include a transceiver 1130. The processor 1110 may communicate with other devices or chips via the transceiver 1130. For example, the processor 1110 may transmit and receive data with other devices or chips via the transceiver 1130.

An embodiment of the present disclosure further provides a computer-readable storage medium configured to store a program. The computer-readable storage medium may be applied to the terminal device according to an embodiment of the present disclosure, and the program causes the computer to execute the methods performed by the terminal device in various embodiments of the present disclosure.

An embodiment of the present disclosure further provides a computer program product. The computer program product includes a program. The computer program product may be applied to the terminal device according to an embodiment of the present disclosure, and the program enables the computer to execute the methods performed by the terminal device in the various embodiments of the present disclosure.

An embodiment of the present disclosure further provides a computer program. The computer program may be applied to the terminal device according to an embodiment of the present disclosure, and the computer program causes the computer to execute the methods performed by the terminal device in the various embodiments of the present disclosure.

It should be understood that the terms "system" and "network" may be used interchangeably in the present disclosure. In addition, the terms used in the disclosure are only configured to explain the specific embodiments of the present disclosure, but not intended to limit the present disclosure. The terms "first," "second," "third," "fourth" etc., in the specification, claims and drawings of the present disclosure are configured to distinguish different objects, rather than to describe a specific order. In addition, the terms "include," "comprise," and "have" and any variations thereof are intended to cover non-exclusive inclusion.

In the embodiments of the present disclosure, the "indication" mentioned may be a direct indication or an indirect indication, or may represent that there is an associated relationship. For example, A indicating B may mean that A directly indicates B, for example, B may be obtained by A; or A indicating B may mean that A indirectly indicates B, e.g., A indicates C, and B may be obtained by C; or A indicating B may mean that there is an association relationship between A and B.

In the embodiments of the present disclosure, "B corresponding to A" means that B is associated with A, and B may be determined based on A. However, it should also be understood that determining B based on A does not mean determining B based merely on A, and B may also be determined based on A and/or other information.

In the embodiments of the present disclosure, the term "correspondence" may mean that there is a direct or indirect correspondence between the two, or an association relationship between the two, or a relationship of indicating and being indicated, or configuring and being configured, etc.

In the embodiments of the present disclosure, "predefined" or "preconfigured" may be implemented by pre-saving corresponding codes, tables or other manners that may be used to indicate related information, in the device (for example, including the terminal device and the network device), and the present disclosure does not limit its specific implementation. For example, predefined may refer to what is defined in a protocol.

In the embodiments of the present disclosure, the "protocol" may refer to standard protocols in the communication field. For example, the "protocol" may include an LTE protocol, an NR protocol, and related protocols applied in future communication systems, which are not limited to the present disclosure.

In the embodiments of the present disclosure, the term "and/or" is only an association relationship to describe associated objects, indicating that there may be three relationships, for example, "A and/or B" may mean three cases of: A exists alone, both A and B exist, and B exists alone. In addition, the character "/" herein generally means that the associated objects before and after this character are in an "or" relationship.

In the various embodiments of the present disclosure, the serial number of the above various processes does not mean the order of execution. The execution order of the various processes should be determined by its function and internal logic, and should not constitute any limitation on the implementation process of the embodiments of the present disclosure.

In several embodiments provided in the present disclosure, it should be understood that the disclosed systems, apparatuses, and methods may be implemented in other manners. For example, the apparatus embodiments described above are only illustrative. For example, the division of the units is only a logical function division. There may be other division manners in actual implementation. For example, multiple units or components may be combined or integrated into another system, or some features may be ignored or not executed. On the other aspect, the mutual coupling or direct coupling or communication connection illustrated or discussed may be an indirect coupling or communication connection through some interfaces, apparatuses or units, and may be electrical, mechanical or other forms.

The units described as separation components may or may not be physically separated, and the component displayed as a unit may be or may not be a physical unit, that is, the component displayed as a unit may be located at one place, or may be distributed to multiple network units. Some or all of the units may be selected according to actual requirements to achieve the purpose of the solutions of the embodiments.

In addition, various functional units in the various embodiments of the present disclosure may be integrated into one processing unit, various units may exist physically alone, or two or more units may be integrated into one unit.

The above embodiments may be implemented in whole or in part by software, hardware, firmware or any combination thereof. When the embodiments are implemented by using software, they may be implemented in whole or in part in the form of a computer program product. The computer program product includes one or more computer instructions. When the computer program instructions are loaded and executed on a computer, the processes or functions described in the embodiments of the present disclosure are generated in whole or in part. The computer may be a general computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (e.g., coaxial cable, optical fiber, digital subscriber line (DSL)) or wireless (e.g., infrared, wireless, microwave, etc.) manner. The computer-readable storage medium may be any available medium that can be read by a computer, or may be a data storage device such as a server or a data center that includes one or more available media, etc. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The foregoing is only the specific implementations of the present disclosure. However, the protection scope of the present disclosure is not limited thereto. Any variations or replacements apparent to those skilled in the art within the technical scope disclosed by the present disclosure shall fall within the protection scope of the present disclosure. Therefore, the protection scope of the present disclosure shall be subject to the protection scope of the claims.

## Claims

1.  A resource selection method, comprising:

    determining, by a physical layer of a terminal device, a first candidate resource set within a resource selection window, wherein resources in the first candidate resource set are sidelink positioning reference signal resources within the resource selection window; and
    reporting, by the physical layer of the terminal device, a second candidate resource set to a media access control (MAC) layer of the terminal device, wherein the second candidate resource set comprises part or all of the resources in the first candidate resource set.

2.  The method according to claim 1, wherein the resources in the first candidate resource set belong to a first resource pool, the first resource pool comprises one or more slots located within the resource selection window, and the first candidate resource set comprises all sidelink positioning reference signal resources in the one or more slots.

3.  The method according to claim 2, wherein the sidelink positioning reference signal resources in the one or more slots are determined based on configuration information or pre-configuration information of a network device.

4.  The method according to claim 1, wherein the resources in the first candidate resource set are resources located in specific orthogonal frequency division multiplexing (OFDM) symbols, wherein the specific OFDM symbols are indicated by a higher layer of the terminal device.

5.  The method according to claim 1, wherein the resources in the first candidate resource set are sidelink positioning reference signal resources determined based on first indication information of the MAC layer.

6.  The method according to claim 5, wherein the first indication information is used to indicate an identifier of the sidelink positioning reference signal resources.

7.  The method according to claim 1, wherein the resources in the first candidate resource set are sidelink positioning reference signal resources meeting a first condition within the resource selection window.

8.  The method according to claim 7, wherein the first condition is associated with one or more of the following:

    a number of symbols occupied by the sidelink positioning reference signal resources;
    a comb size corresponding to the sidelink positioning reference signal resources; and
    a bandwidth occupied by the sidelink positioning reference signal resources.

9.  The method according to claim 8, wherein the first condition comprises one or more of the following:

    the number of symbols occupied by the sidelink positioning reference signal resources being greater than or equal to a first threshold;
    the number of symbols occupied by the sidelink positioning reference signal resources being less than or equal to a second threshold;
the comb size corresponding to the sidelink positioning reference signal resources being greater than or equal to a third threshold;
the comb size corresponding to the sidelink positioning reference signal resources being less than or equal to a fourth threshold;
the bandwidth occupied by the sidelink positioning reference signal resources being greater than or equal to a fifth threshold; and
the bandwidth occupied by the sidelink positioning reference signal resources being less than or equal to a sixth threshold.

10. The method according to claim 9, wherein one or more of the first threshold, the second threshold, the third threshold, the fourth threshold, the fifth threshold and the sixth threshold are determined based on indication information of the MAC layer.

11. The method according to any one of claims 1 to 10, wherein the second candidate resource set is a candidate resource set obtained after excluding one or more resources from the first candidate resource set, the one or more resources comprise a first resource and a second resource, the first resource is a resource indicated or reserved by first sidelink control information (SCI), the second resource occupies a same symbol as the first resource, and a resource element (RE) offset corresponding to the second resource is different from an RE corresponding to the first resource.

12. The method according to claim 11, wherein whether to exclude the second resource is determined based on one or more of the following:

    a measurement result for the first SCI; and
    an implementation of the terminal device.

13. The method according to claim 12, wherein the measurement result is a measurement result of a received signal strength indication (RSSI) for the first SCI.

14. The method according to claim 13, wherein the measurement result indicates that the RSSI is greater than or equal to a seventh threshold, and the seventh threshold is determined based on configuration information or pre-configuration information of a network device.

15. The method according to any one of claims 1 to 14, wherein determining, by the physical layer of the terminal device, the first candidate resource set within the resource selection window comprises:
in a case where sidelink positioning reference signal resources associated with a first sidelink grant do not meet a second condition, determining, by the physical layer of the terminal device, the first candidate resource set, the first sidelink grant being a sidelink grant that has been selected by the terminal device for sidelink positioning reference signal transmission.

16. The method according to claim 15, wherein the second condition is associated with one or more of the following:

    transmission time corresponding to a physical sidelink control channel (PSCCH) in one or more transmission opportunities of the sidelink positioning reference signal; and
    active time of a discontinuous reception (DRX) of a receiving device of the sidelink positioning reference signal;
    wherein the one or more transmission opportunities of the sidelink positioning reference signal are associated with the first sidelink grant.

17. The method according to claim 16, wherein the second condition comprises that the transmission time corresponding to the PSCCH in the one or more transmission opportunities does not belong to the active time of the DRX.

18. The method according to claim 16 or 17, wherein the one or more transmission opportunities are multiple consecutive transmission opportunities.

19. The method according to claim 15, wherein the second condition is that the sidelink positioning reference signal resources associated with the first sidelink grant do not match a first sidelink positioning reference signal to be transmitted.

20. The method according to claim 19, wherein the second condition comprises one or more of the following:

a period of one or more transmission opportunities of the sidelink positioning reference signals associated with the first sidelink grant not matching a period of the first sidelink positioning reference signal;
a number of symbols comprised in the one or more sidelink positioning reference signal resources associated with the first sidelink grant not matching a number of symbols occupied by the first sidelink positioning reference signal; and
a comb size of one or more sidelink positioning reference signal resources associated with the first sidelink grant not matching a comb size corresponding to the first sidelink positioning reference signal.

21. A terminal device, comprising:

a determining module, configured for a physical layer of the terminal device to determine a first candidate resource set within a resource selection window, wherein resources in the first candidate resource set are sidelink positioning reference signal resources within the resource selection window; and
a reporting module, configured for the physical layer of the terminal device to report a second candidate resource set to a media access control (MAC) layer of the terminal device, wherein the second candidate resource set comprises part or all of the resources in the first candidate resource set.

22. The terminal device according to claim 21, wherein the resources in the first candidate resource set belong to a first resource pool, the first resource pool comprises one or more slots located within the resource selection window, and the first candidate resource set comprises all sidelink positioning reference signal resources in the one or more slots.

23. The terminal device according to claim 22, wherein the sidelink positioning reference signal resources in the one or more slots are determined based on configuration information or pre-configuration information of a network device.

24. The terminal device according to claim 21, wherein the resources in the first candidate resource set are resources located in specific orthogonal frequency division multiplexing (OFDM) symbols, wherein the specific OFDM symbols are indicated by a higher layer of the terminal device.

25. The terminal device according to claim 21, wherein the resources in the first candidate resource set are the sidelink positioning reference signal resources determined based on first indication information of the MAC layer.

26. The terminal device according to claim 25, wherein the first indication information is used to indicate an identifier of the sidelink positioning reference signal resources.

27. The terminal device according to claim 21, wherein the resources in the first candidate resource set are the sidelink positioning reference signal resources meeting a first condition within the resource selection window.

28. The terminal device according to claim 27, wherein the first condition is associated with one or more of the following:

a number of symbols occupied by the sidelink positioning reference signal resources;
a comb size corresponding to the sidelink positioning reference signal resources; and
a bandwidth occupied by the sidelink positioning reference signal resources.

29. The terminal device according to claim 28, wherein the first condition comprises one or more of the following:

the number of symbols occupied by the sidelink positioning reference signal resources being greater than or equal to a first threshold;
the number of symbols occupied by the sidelink positioning reference signal resources being less than or equal to a second threshold;
the comb size corresponding to the sidelink positioning reference signal resources being greater than or equal to a third threshold;
the comb size corresponding to the sidelink positioning reference signal resources being less than or equal to a fourth threshold;
the bandwidth occupied by the sidelink positioning reference signal resources being greater than or equal to a fifth threshold; and
the bandwidth occupied by the sidelink positioning reference signal resources being less than or equal to a sixth threshold.

30. The terminal device according to claim 29, wherein one or more of the first threshold, the second threshold, the third threshold, the fourth threshold, the fifth threshold and the sixth threshold are determined based on indication information of the MAC layer.

31. The terminal device according to any one of claims 21 to 30, wherein the second candidate resource set is a candidate resource set obtained after excluding one or more resources from the first candidate resource set, the one or more resources comprise a first resource and a second resource, the first resource is a resource indicated or reserved by first sidelink control information (SCI), the second resource occupies a same symbol as the first resource, and a resource element (RE) offset corresponding to the second resource is different from an RE corresponding to the first resource.

32. The terminal device according to claim 31, wherein whether to exclude the second resource is determined based on one or more of the following:

a measurement result for the first SCI; and
an implementation of the terminal device.

33. The terminal device according to claim 32, wherein the measurement result is a measurement result of a received signal strength indication (RSSI) for the first SCI.

34. The terminal device according to claim 33, wherein the measurement result indicates that the RSSI is greater than or equal to a seventh threshold, and the seventh threshold is determined based on configuration information or pre-configuration information of a network device.

35. The terminal device according to any one of claims 21 to 34, wherein determining, by the physical layer of the terminal device, the first candidate resource set within the resource selection window comprises:
in a case where sidelink positioning reference signal resources associated with a first sidelink grant do not meet a second condition, determining, by the physical layer of the terminal device, the first candidate resource set, the first sidelink grant being a sidelink grant that has been selected by the terminal device for sidelink positioning reference signal transmission.

36. The terminal device according to claim 35, wherein the second condition is associated with one or more of the following:

transmission time corresponding to a physical sidelink control channel (PSCCH) in one or more transmission opportunities of the sidelink positioning reference signal; and
active time of a discontinuous reception (DRX) of a receiving device of the sidelink positioning reference signal;
wherein the one or more transmission opportunities of the sidelink positioning reference signal are associated with the first sidelink grant.

37. The terminal device according to claim 36, wherein the second condition comprises that the transmission time corresponding to the PSCCH in the one or more transmission opportunities does not belong to the active time of the DRX.

38. The terminal device according to claim 36 or 37, wherein the one or more transmission opportunities are multiple consecutive transmission opportunities.

39. The terminal device according to claim 35, wherein the second condition is that the sidelink positioning reference signal resources associated with the first sidelink grant do not match a first sidelink positioning reference signal to be transmitted.

40. The terminal device according to claim 39, wherein the second condition comprises one or more of the following:

a period of one or more transmission opportunities of the sidelink positioning reference signals associated with the first sidelink grant not matching a period of the first sidelink positioning reference signal;
a number of symbols comprised in the one or more sidelink positioning reference signal resources associated with the first sidelink grant not matching a number of symbols occupied by the first sidelink positioning reference signal; and

a comb size of one or more sidelink positioning reference signal resources associated with the first sidelink grant not matching a comb size corresponding to the first sidelink positioning reference signal.

41. A terminal device, comprising a transceiver, a memory and a processor, wherein the memory is configured to store a program, and the processor is configured to call the program in the memory and control the transceiver to receive or transmit a signal, to enable the terminal device to perform the method according to any one of claims 1 to 20.

42. An apparatus, comprising a processor, configured to call a program from a memory, to enable the apparatus to perform the method according to any one of claims 1 to 20.

43. A chip, comprising a processor, configured to call a program from a memory, to enable a device equipped with the chip to perform the method according to any one of claims 1 to 20.

44. A computer-readable storage medium, having stored thereon a program that enables a computer to perform the method according to any one of claims 1 to 20.

45. A computer program product, comprising a program that enables a computer to perform the method according to any one of claims 1 to 20.

46. A computer program, enabling a computer to perform the method according to any one of claims 1 to 20.

FIG. 1

FIG. 2

FIG. 3

FIG. 4

FIG. 5

0  1  2  3  4  5  6  7  8  9  10  11  12  13  14  15  16  17  18  19

*f*（RB）

⬚ Interlaced resource block 0    ⬚ Interlaced resource block 1

FIG. 6

*t* (OFDM Symbol)

AGC    PSCCH1    PSSCH1    PSCCH2    PSSCH2    GP

FIG. 7

60 MHz carrier bandwidth

| 20 MHz | | 20 MHz | | 20 MHz |
|---|---|---|---|---|
| RB Set #0 | Guard period | RB Set #1 | Guard period | RB Set #2 |

FIG. 8

| A physical layer of a terminal device determines a first candidate resource set within a resource selection window | S910 |
|---|---|

| The physical layer of the terminal device reports a second candidate resource set to an MAC layer | S920 |
|---|---|

FIG. 9

Terminal device 1000

Determining module 1010

Reporting module 1020

FIG.10

Apparatus 1100

Processor 1110

Memory 1120

Transceiver 1130

FIG.11

## INTERNATIONAL SEARCH REPORT

| International application No. |
|---|
| **PCT/CN2023/112321** |

| A. | CLASSIFICATION OF SUBJECT MATTER |
|---|---|
| | H04W72/25(2023.01)i; H04W72/04(2023.01)i |

According to International Patent Classification (IPC) or to both national classification and IPC

| B. | FIELDS SEARCHED |
|---|---|

Minimum documentation searched (classification system followed by classification symbols)

    IPC:H04W,H04L

Documentation searched other than minimum documentation to the extent that such documents are included in the fields searched

Electronic data base consulted during the international search (name of data base and, where practicable, search terms used)

    CNABS; CNTXT; VEN; USTXT; EPTXT; WOTXT; ENTXTC; CNKI; IEEE; 3GPP: 边链路, 侧链路, 侧行, 侧行定位参考信号, 侧行链路, 副链路, 副链路定位参考信号, 旁链路, 直接通信, 直连链路, 直通链路, 资源, 选择窗, Layer, MAC, Physical, PRS, Sidelink, SL, window, select+, resource?

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | VIVO. "Discussion on potential solutions for sidelink positioning" *3GPP TSG RAN WG1 #109-e, R1- 2203566*, 29 April 2022 (2022-04-29),     section 4 | 1-46 |
| Y | QUALCOMM INC. "Resource Allocation for SL-PRS" *3GPP TSG RAN WG1 #112, R1- 2301419*, 17 February 2023 (2023-02-17),     sections 3.3 and 4.1-4.3 | 1-46 |
| A | CN 116097798 A (BEIJING XIAOMI MOBILE SOFTWARE CO., LTD.) 09 May 2023 (2023-05-09)     entire document | 1-46 |
| A | WO 2023046053 A1 (VIVO MOBILE COMMUNICATION CO., LTD.) 30 March 2023 (2023-03-30)     entire document | 1-46 |
| A | OPPO. "Discussion on resource allocation for SL positioning reference signal" *3GPP TSG RAN WG1 #112, R1-2300303*, 17 February 2023 (2023-02-17),     entire document | 1-46 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 November 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 583 614 A1

## INTERNATIONAL SEARCH REPORT
### Information on patent family members

| | International application No. |
|---|---|
| | **PCT/CN2023/112321** |

| Patent document cited in search report | | | Publication date (day/month/year) | Patent family member(s) | Publication date (day/month/year) |
|---|---|---|---|---|---|
| CN | 116097798 | A | 09 May 2023 | None | |
| WO | 2023046053 | A1 | 30 March 2023 | None | |

Form PCT/ISA/210 (patent family annex) (July 2022)